(19) Europäisches Patentamt
European Patent Office
Office européen des brevets

(11) **EP 3 051 823 A1**

(12) **EUROPEAN PATENT APPLICATION**

(43) Date of publication:
**03.08.2016 Bulletin 2016/31**

(51) Int Cl.:
**H04N 19/70** (2014.01)     **H04N 19/85** (2014.01)
**H04N 19/98** (2014.01)

(21) Application number: **15305092.7**

(22) Date of filing: **27.01.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Reinhard, Erik**
  **35576 Cesson-Sévigné (FR)**

• **Andrivon, Pierre**
  **35576 Cesson-Sévigné (FR)**
• **Bordes, Philippe**
  **35576 Cesson-Sévigné (FR)**
• **Francois, Edouard**
  **35576 Cesson-Sévigné (FR)**

(74) Representative: **Huchet, Anne et al**
**Technicolor**
**1, rue Jeanne d'Arc**
**92443 Issy-les-Moulineaux Cedex (FR)**

(54) **Methods, systems and aparatus for electro-optical and opto-electrical conversion of images and video**

(57)     The present principles are directed to a parameterized OETF/EOTF for processing images and video. The present principles provide a method for encoding a picture, comprising: applying a parameterized transfer function to a luminance (L) signal of the picture to determine a resulting V(L) transformed signal; encoding the resulting V(L); wherein the parameterized transfer function is adjusted based on a plurality of parameters to model one of a plurality of transfer functions. The present principles also provide for a method for decoding a digital picture, the method comprising: receiving the digital picture; applying a parameterized transfer function to the digital picture to determine a luminance (L) signal of the digital picture, the parameterized transfer function being based on a plurality of parameters; wherein the parameterized transfer function is adjusted based on a plurality of parameters to model one of a plurality of transfer functions.

Figure 2

**Description**

**TECHNICAL FIELD**

The present disclosure relates to image and video processing. In particular, the present disclosure relates to conversion of image or video data to optimize captured light information for human vision.

**BACKGROUND**

In high dynamic range (HDR) imaging pipelines or video distribution systems, images are typically pre-processed prior to encoding and post-processed after decoding. This allows the use of conventional image or video encoding and decoding standards (such as JPEG, AVC or HEVC) to operate on HDR video without requiring important modifications to existing encoding standards, and without requiring higher bit-depths for distribution (typically 10-bit)..

The pre-processing of video images may include applying a one dimensional color component transform to linear light RGB components and/or to the luminance components. Such transforms optimize the quantization of captured light information, often by modeling aspects of human vision. One such transform is also known as the Opto-Electrical Transfer Function (OETF). OETF is a known gamma function (e.g. described in ITU-R Rec. BT.709).

During the post-processing or rendering stage, the display rendering process compensates for the OETF and the display's illumination environment. The decoded video is processed using an Electro-Optical Transfer Function (EOTF) before rendering the video frames. The EOTF converts a digital code value (also known as codeword) in the decoded signal to a light level of the display. The EOTF is often the mathematical inverse of the OETF, but, depending on the display's requirements, may also be different from the inverse of the OETF. For instance, a standard dynamic range (SDR) video signal OETF is referred in ITU-R Rec. BT.709 as a two-piece function (a linear part and a power function part) however the corresponding EOTF is referred in ITU-R Rec. BT.1886 as a one piece function (power function) different from the inverse OETF.

Presently existing OETF/EOTF are fixed proposals that only provide a single mapping of luminance values to digital code words (OETF), and a single mapping from digital code words back to luminance values (EOTF). Different goals and objectives have given rise to many different, single mapping proposals that advocate the use of mutually-exclusive, fixed mappings. For example, there are several EOTF/OETF pairs that have been proposed for standardization, e.g., ITU-R SG6/W6-C group, Working Party 6C (WP 6C) - Programme production and quality assessment , http://www.itu.int/en/ITU-R/study-groups/rsg6/rwp6c/Pages/default.aspx. The various EOTF/OETF proposals however have different secondary goals or are addressing different market segment (theatrical release, broadcast or packaged media). Thus, the existing OETF/EOTF are not optimized in view of different situations.

**SUMMARY OF PRESENT PRINCIPLES**

There is thus a need to improve the OETF/EOTF.

The present invention proposes to alleviate some of the inconveniences of prior art by providing a solution that allows adaptive modification between different OETF/EOTF curves. Such a solution is needed because each of the proposed OETF/EOTF curves has different advantages and disadvantages. For instance, BBC has proposed an OETF curve covering a smaller range of luminance values, but aims to allow near-backward compatibility with legacy ITU-R Recommendation BT.709 (Rec. 709) (Borer, T., Non-linear Opto-Electrical Transfer Functions for High Dynamic Range Television. -: BBC, 2013). On the other hand, Dolby has proposed OETF/EOTF (PQ_EOTF) curves covering a very large range from 0.005 to $10^4 cd/m^2$ of luminance values (US 2014/0363093; Scott Miller, M. N., Perceptual Signal Coding for More Efficient Usage of Bit Codes. SMPTE Motion Imaging Journal, 122, 52-59, 2013). The Dolby proposed curves are matched against a modulation transfer function which is the reciprocal of an elaborate model of human contrast sensitivity (Barten, P. G., Contrast Sensitivity of the Human Eye and its Effects on Image Quality (Vol. 72), Bellingham: SPIE Optical Engineering Press, 1999). In turn, Philips has proposed an OETF curve based on visual inspection of a variety of data (Vleuten, R. v., Philips' High Dynamic Range Proposal. Joint DVB-EBU HDR Workshop, 2014). Some of the proposed OETF/EOTF curves require a fixed bit-depth, while others could be adapted to 10 or 12 bits video signal bit-depth.

Moreover, a need exists for adaptive modification between different OETF/EOTF curves because the amount of possible OETF/EOTF curves is likely to increase in view of the increasing variability of new video format characteristics, services and rendering devices. For example, new definitions of OETF/EOTFs curves will likely be needed for new applications or rendering devices that are directed to specific types of video. It is still unclear what OETF/EOTF will best serve the needs of consumers, display manufacturers, and content producers given that the choices for bit-depth, peak luminance and minimum luminance are still under consideration. As such, a need exists for an adaptive OETF/EOTF that can mimic the behavior of presently proposed or new OETF/EOTF curves.

Moreover, there is a need for adaptive modification between different OETF/EOTF curves in order to avoid interoperability problems. Various OETF/EOTF curve proposals are being considered by various standardization organizations (e.g., ITU-R, BDA, CEA, HDMI, SMPTE). These various organizations are each defining their own HDR video signals based on different OETF/EOTF proposals. These organizations may adopt different EOTF/OETF proposals, resulting in different technical solutions according to the targeted applications and technology maturity. The adoption of different EOTF/OETF curves may result in the problems of market fragmentation, interoperability issues, silicon waste (e.g., due to systems-on-chip (SoC) for different market segments, OTT/VoD/Blu-ray/Broadcast that would have to implement different OETF/EOTF). Thus, there is a need for an *adaptive* solution that works across different standards and with different OETF/EOTF curves.

There is also a need for a mechanism for signaling OETF/EOTF curves without significant bit-stream overhead. The OETF/EOTF curves may be signaled in coded video streams using various existing syntax, such as the knee function information SEI that is defined in the HEVC standard for instance. The knee function describes the function as piecewise linear curves whose knee point coordinates are encoded and transmitted in the bit-stream. However, since this information should be regularly inserted in the bit-stream for error resilience considerations, it may induce a significant bit-stream overhead.

The present principles provide a method for encoding a picture, comprising: applying a parameterized transfer function to a luminance (L) signal of the picture to determine a resulting V(L) transformed signal; encoding the resulting V(L); wherein the parameterized transfer function is adjusted based on a plurality of parameters to model one of a plurality of transfer functions.

According to a specific embodiment of the invention, the method comprises signaling an information representative of the parameterized transfer function.

According to specific embodiments of the invention, the method comprises encoding the parameters and signaling the encoded parameters in a bit-stream; according to a variant, the method further comprises signaling an indicator of the parameters in a bit-stream based on a set of defined values.

According to specific embodiments, the method comprises signaling an indication based on whether the parameters are signaled explicitly or whether the parameters are signaled implicitly based on a set of defined value.

According to various embodiments, the signaling is performed using at least one syntax element included in at least one of a Picture Parameter Set (PPS), a Sequence Parameter Set (SPS), a Supplemental Enhancement Information (SEI) message, a Video Usability Information (VUI) (as defined for example in video compression standards such as AVC or HEVC), Consumer Electronics Association (CEA) message, and a header.

According to various embodiments of the invention, the luminance is at least one selected from a group of: RGB, Y, a linear combination of linear RGB, a luma that is a linear combination of non-linear RGB, and non-linear luminance.

According to embodiments of the inventions, the luminance is at least one of a relative luminance and an absolute luminance.

According to specific embodiments of the invention, the parameterized transfer function is determined based on a functional model represented with function:

$$V(L) = \frac{sL^n + c}{L^n + st} + m$$

where s, t, c, n, and m are the parameters and L is a luminance value of the picture.

According to specific embodiments of the invention, the parameterized transfer function is determined based on a functional model represented with function:

$$V(L) = \frac{sL^n + c}{L^n + st}$$

where s, t, c, and n are the parameters and L is a luminance value of the picture.

According to specific embodiments of the invention, the parameterized transfer function is determined based on a functional model represented with function:

$$V(L) = \frac{sL + c}{L + st} + m$$

where s, t, c and m are the parameters and *L* is a luminance value of the picture.

According to specific embodiments of the invention, encoding the resulting V(L) includes compressing V(L) with a picture or video encoder.

According to specific embodiments of the invention, encoding the resulting V(L) includes digitizing or quantizing the resulting V(L).

According to specific embodiments of the invention, the parameters are determined based on at least one selected from a group of: a plurality of parameters received from a source, locally stored parameters, a set of defined parameters chosen from among a plurality of sets of defined parameters.

According to various embodiments of the inventions, the picture is in a video stream of pictures.

According to a specific embodiment of the invention, the picture is a High Dynamic Range (HDR) picture. According to another embodiment of the invention, the picture is a non High Dynamic Range (non-HDR) picture.

The present principles also provide an apparatus for performing the method of encoding a picture as described above.

In particular, the invention concerns an apparatus for encoding a picture, the apparatus comprising:

a receiver configured to receive the picture;
a processor configured to apply a parameterized transfer function to a luminance (L) signal of the picture to determine a resulting V(L) transformed signal;
an encoder configured to the resulting V(L);
wherein the parameterized transfer function is adjusted based on a plurality of parameters to model one of a plurality of transfer functions.

The present principles provide for a method for decoding a digital picture, the method comprising: receiving the digital picture; applying a parameterized transfer function to the digital picture to determine a luminance (L) signal of the digital picture, the parameterized transfer function being based on a plurality of parameters; wherein the parameterized transfer function is adjusted based on a plurality of parameters to model one of a plurality of transfer functions.

According to specific embodiments of the invention, the method comprises decoding an information representative of the parameterized transfer function associated with the digital picture. This enables the decoding method to identify or determine the parameterized transfer function.

According to an embodiment, the method comprises decoding the parameters and/or an indicator of the parameters from a bit-stream.

According to an embodiment, the method comprises decoding an indication from a bit-stream, the indication based on whether the parameters are signaled explicitly or whether the parameters are signaled implicitly based on a set of defined values.

According to an embodiment, the bit-stream includes signaling of the parameters based on at least one syntax element included in at least one of a Picture Parameter Set (PPS), a Sequence Parameter Set (SPS), a Supplemental Enhancement Information (SEI) message, a Video Usability Information (VUI) (as defined for example in video compression standards such as AVC or HEVC), Consumer Electronics Association (CEA) message, and a header.

According to an embodiment, the parameterized transfer function is determined based on a functional model represented with function:

$$L(V) = \left( \frac{c - (V - m)st}{V - m - s} \right)^{1/n}$$

where s, t, c, n, and m are the parameters and V is a codeword.

According to an embodiment, the parameterized transfer function is determined based on a functional model represented with function:

$$L(V) = \left( \frac{c - (V - m)st}{\min (V - m - s, M)} \right)^{1/n}$$

where s, t, c, n, and m are the parameters, where M is a constant function and V is a codeword.

According to an embodiment, the parameterized transfer function is determined based on a functional model represented with function:

$$L(V) = \left( \frac{c - (V)st}{V - s} \right)^{1/n}$$

where s, t, c, and n are the parameters and V is a codeword.

According to an embodiment, the parameterized transfer function is determined based on a functional model represented with function:

$$L(V) = \left( \frac{c - Vst}{\min(V - s, M)} \right)^{1/n}$$

where s, t, c, and n are the parameters, where M is a constant function and V is a codeword representative of the digital picture.

The present principles also provide an apparatus for performing the method of decoding a digital picture as described above.

According to an embodiment of the invention, an apparatus for decoding a digital picture, the apparatus comprising:

a receiver configured to receive the digital picture;
a processor configured to apply a parameterized transfer function to the digital picture to determine a luminance (L) signal of the digital picture, the parameterized transfer function being based on a plurality of parameters;
wherein the parameterized transfer function is adjusted based on a plurality of parameters to model one of a plurality of transfer functions

According to embodiment of the methods for encoding or decoding or of apparatus for encoding or decoding the parameters are generated by optimizing a parameterized transfer function with an identified transfer function to be modeled.

The present principles also provide a computer readable storage medium having stored thereon instructions for pre-processing or post-processing images according to the methods described above.

The present principles also provide a computer readable storage medium having stored thereon a bit-stream generated according to the methods described above.

## BRIEF SUMMARY OF THE DRAWINGS

The features and advantages of the present invention may be apparent from the detailed description below when taken in conjunction with the Figures described below:

Fig. 1 is a diagram depicting an exemplary method of encoding a picture using OETF in a capture and distribution workflow.

Fig. 2 is a diagram depicting an exemplary method for encoding a picture using a parameterized OETF in accordance with present principles.

Fig. 3 is a diagram depicting an exemplary method for encoding parameters of a parameterized OETF in accordance with present principles.

Fig. 4 is a diagram depicting an exemplary method for decoding a digital picture using EOTF or inverse parameterized OETF in a distribution and rendering system.

Fig. 5 is a diagram depicting an exemplary method for decoding parameters of a parameterized EOTF or inverse parameterized OETF in accordance with present principles

Fig. 6 is a diagram depicting an exemplary scheme of encoding a picture using a parameterized OETF in accordance with present principles.

Fig. 7 is a diagram depicting an exemplary scheme of decoding a digital picture using a parameterized EOTF or inverse parameterized OETF in accordance with present principles.

Fig. 8 represents an exemplary architecture of a device which may be configured to implement a method described in relation with Fig. 1-7.

Fig. 9 illustrates an example of a plot demonstrating performance results of the parameterized OETF in accordance with present principles (labeled TCH) relative to other existing OETFs.

Fig. 10A illustrates an example of a plot demonstrating performance of the results of the parameterized OETF in accordance with present principles (labeled TCH) relative to SMPTE ST 2084 OETF curve.

Fig. 10B illustrates an example of a plot demonstrating performance of the results of the parameterized OETF in accordance with present principles (labeled TCH) relative to Barten MTF curve.

Fig. 10C illustrates an example of a plot demonstrating performance of the results of the parameterized OETF in accordance with present principles (labeled TCH) relative to BBC OETF curve.

Fig. 11A illustrates an example of a plot demonstrating performance of the results of the parameterized EOTF (or inverse OETF) in accordance with present principles (labeled TCH) relative to SMPTE ST 2084 OETF curve.

Fig. 11B illustrates an example of a plot demonstrating performance of the results of the parameterized EOTF (or inverse OETF) in accordance with present principles (labeled TCH) relative to Barten MTF curve.

Fig. 11C illustrates an example of a plot demonstrating performance of the results of the parameterized EOTF (or inverse OETF) in accordance with present principles (labeled TCH) relative to BBC OETF curve.

Fig. 12A illustrates an example of a plot demonstrating performance of the results of the parameterized OETF in accordance with present principles (labeled TCH) relative to SMPTE ST 2084 OETF curve.

Fig. 12B illustrates an example of a plot demonstrating performance of the results of the parameterized OETF in accordance with present principles (labeled TCH) relative to Barten MTF curve.

Fig. 12C illustrates an example of a plot demonstrating performance of the results of the parameterized OETF in accordance with present principles (labeled TCH) relative to BBC OETF curve.

Fig. 13A illustrates an example of a plot demonstrating performance of the results of the parameterized EOTF (or inverse OETF) in accordance with present principles (labeled TCH) relative to SMPTE ST 2084 OETF curve.

Fig. 13B illustrates an example of a plot demonstrating performance of the results of the parameterized EOTF (or inverse OETF) in accordance with present principles (labeled TCH) relative to Barten MTF curve.

Fig. 13C illustrates an example of a plot demonstrating performance of the results of the parameterized EOTF (or inverse OETF) in accordance with present principles (labeled TCH) relative to BBC OETF curve.

## DETAILED DESCRIPTION

The present principles are directed to parameterized OETF and EOTF for processing images and video. In particular, the present principles are directed to a pair of OETF/EOTF curves based on a plurality of parameters that allow the OETF/EOTF curves to model the behavior of a selected current standard OETF/EOTF proposals, future standard OETF/EOTF or custom OETF/EOTF proposals.

The present principles are directed to providing OETF/EOTF that can adapt to a variety of markets, cases and/or uses. The OETF/EOTF is adaptive based on a plurality of parameters that can be changed or adjusted to allow the OETF/EOTF to dynamically adapt to content. The parameter settings can be derived, for instance per content, per movie, or per frame, and these can be communicated as metadata for decoding on the display side (e.g. using a metadata channel through an HDMI link).

The present principles are directed to an adaptive OETF/EOTF pair that can adapt to successive rounds of standardization, thus providing an upgrade path or enabling forward compatibility. Parameters can be derived for any required bit-depth, peak luminance and black level. Thus, in static scenarios it is possible to standardize one set of parameters now to match current market needs, and in the future different sets of parameters can be standardized to match future market trends in terms of bit-depth, peak luminance and black level.

The present principles are directed to an adaptive OETF/EOTF pair that is compatible with existing proposals through the appropriate choice of parameters.

The present principles are directed to OETF/EOTF optimized against modulation transfer functions and look-up tables modeling human vision.

The present principles also provide parameters to match the performance of a variety of use cases, such as content graded for OTT streaming, broadcast, distribution via Blu-Ray disks or DVDs and others. The parameters of the adaptive OETF/EOTF pair can be set to allow optimal encoding for each distribution mechanism. They can also be set to match existing OETF/EOTF proposals.

The present principles are directed to a novel variant of the Naka-Rushton equation for the purpose of determining quantization levels of HDR image and video data. The proposed OETF is:

$$\text{Eqn. No. 1} \qquad V(L) = \frac{sL^n + c}{L^n + st} + m$$

The input to Eqn. No. 1 is given by either absolute or relative luminance values $L$, while the output $V$ can be quantized to the desired bit-depth. In one example, the luminance value $L$ may be $0 <= L <= 1$. In one example, the luminance value $L$ may be $0 <= L <= 4$. In one example, the luminance value $L$ may be $0.005 <= L <= 10^4$. In one example, the desired bit-depth may be 10-bits.

Luminance may be RGB, Y where Y is is a color channel representing luminance in a color space including at least one of CIE Yxy, CIE Yuv, EBU Y'U'V', NTSC Y'I'Q', ITU-R BT.601 Y'PbPr, ITU-R BT.709 Y'CbCr, SECAM Y'DbDr, and Kodak Y'CC, L where L is a luminance channel in a color space including at least one of CIE Lab and CIE Luv, I where I is the luminance related channel in the IPT color space, V, where V is the value in the HSV color space, B where B is the brightness in the HSB color space, and I where I is the intensity channel in the HSI color space. Luminance may also be a linear combination of linear RGB, or a luma that is a linear combination of non linear RGB. Luminance may also be Linear Color Value as defined by SMPTE ST2084 standard, luminance as defined by ITU-R, e.g. BT.709-5, or non-linear luminance, e.g. after application of tone mapping to pixel values.

The parameters $s$, t, $c$, $n$ and m in Eqn. 1 may be set for each proposed OETF/EOTF proposal or for particularly foreseen use scenarios or workflows. Alternatively, the parameters may be set dynamically (e.g. per frame or per sequence) based on video content. In that case, the parameters would have to be sent along the video stream as meta-data to enable appropriate decoding by the receiver. The parameters $s$, t, $c$, $n$ and m in Eqn. 1 may be set such that the output V(L) of Equation 1 is normalized to a desired range. In one example, the range of values taken by V(L) is 0<=V(L)<=1. In one example, the range of values taken by V(L) is 0<=V(L)<=4096 and corresponds to a 12-bit full-range encoding. In one example the range of values taken by V(L) is 64<=V(L)<=960 and corresponds to 10-bit legal range. The parameters may be received from a source (e.g. a network, a link (e.g., HDMI), an application, a man/machine interface). The parameters may be locally stored (e.g., a defined set of parameters that is pre-determined). The parameters may be a set of pre-defined parameters chosen from among a plurality of sets of pre-defined parameters, where each set may relate to a parameterized transfer function that may relate to a video content property or application (e.g., Blu-ray, DVB, HDMI, CEA, ATSC).

The inverse equation of the proposed OETF can then be used after decoding to restore the original luminance levels. This inverse equation may be the EOTF. Thus, the proposed EOTF or inverse OETF is:

$$\text{Eqn. No. 2} \qquad L(V) = \left( \frac{c - (V-m)st}{V - m - s} \right)^{1/n}$$

V may correspond to video codewords. V may be Non-linear Color Value as defined by SMPTE ST2084 standard or an electrical signal as defined by ITU-R, e.g. BT.709-5. V may also be the output of Eqn. No. 1.

The parameters $s$, t, $c$, $n$ and $m$ are the same parameters utilized by Eqn. No. 2 as the parameters utilized by Eqn. No. 1. The parameters may be sent along with the video stream as meta-data or may be signaled in the bitstream.

In one example, to avoid negative values or divisions by zero, Eqn. No. 2 can be modified to read:

$$\text{Eqn. No. 3} \qquad L(V) = \left( \frac{c - (V-m)st}{\min (V - m - s, M)} \right)^{1/n}$$

M is a constant and is, for example equal to $(-10^{-4})$. In one example, the constant M was chosen to be the negative of a value one order of magnitude below a reasonable minimum luminance value that may need to be reproduced, $V-m-s$ being usually negative. If Eqn. No. 3 is used with relative inputs, then this constant may be chosen to be either larger or smaller, depending on the use case.

The above Equations Nos. 1-3 can be parameterized to achieve various goals. That is, image and video processing may be performed utilizing the Eqns. Nos. 1-3 and provided values for the parameters to achieve certain goals. Different sets of parameters (e.g., different sets of parameters ($s$, t, $c$, $n$ and $m$)) may each achieve different goals. For example, some goals that may be achieved by different parameter sets may include:

- matching/modeling Barten's contrast sensitivity measurements for any reasonable luminance range and bit-depth;
- matching/modeling SMPTE ST 2084 curves;
- matching/modeling the proposed Philips OETF/EOTF; and
- matching/modeling the proposed BBC OETF/EOTF.

As the OETF equation is analytically invertible, applying the OETF followed by the dual inverse OETF (EOTF in this case) will return the original input values, with the exception of small changes that may occur due to quantization artifacts. For certain settings of the parameters, it can also be shown that the OETF applied twice will yield a function of the same form as the original. Thus, for those parameters, the equation is idempotent as further described below.

Finally, the same equation can be used for tone reproduction. This means that applying the OETF at the encoder side yields a viewable image, suitable for display on legacy devices. If the target display is a legacy SDR device (e.g. responding to BT.709 OETF and using BT.1886 EOTF), then it would be possible to decode the video stream, without passing the resulting data through the proposed inverse OETF function. The latter would only be necessary if the target display is an HDR device.

**Example 1**

An aspect of present principles is directed to a pair of OETF/EOTF curves described utilizing a generic model and a set of parameters. Adjusting the parameters adjusts the generic model of the OETF/EOTF curves such that the generic model can perform similarly to one of a plurality of standard or custom OETF/EOTF pairs. The parameters can be signaled in a bit-stream (e.g. defined by MPEG distribution standards or defined by applicative standardization committees such as ATSC, BDA, DVB) or a video signal standard specification (e.g. ITU-R, SMPTE, CEA, HDMI) in order for the decoder/rendering device to be able to reconstruct the inverse OETF or EOTF.

**Example 2**

In one example in accordance with present principles, the generic model of OETF/EOTF may be based on Eqn. Nos. 1-3 described above.
One example of the generic model OETF may be based on Eqn. No. 1:

$$\text{Eqn. No. 1} \qquad V(L) = \frac{sL^n + c}{L^n + st} + m$$

One example of the generic model inverse OETF or EOTF may be based on Eqn. No. 2:

$$\text{Eqn. No. 2} \qquad L(V) = \left(\frac{c - (V-m)st}{V - m - s}\right)^{1/n}$$

One example of the generic model inverse OETF or EOTF may be based on Eqn. No. 3:

$$\text{Eqn. No. 3} \qquad L(V) = \left(\frac{c - (V-m)st}{\min(V - m - s, M)}\right)^{1/n}$$

M is a constant and is, for example equal to $(-10^{-4})$.

**Example 3**

In one example in accordance with present principles, an alternate form of the generic OETF model comprising only four parameters can be constructed as follows:

$$\text{Eqn. No. 4} \qquad V(L) = \frac{sL^n + c}{L^n + st}$$

An alternate form of the generic inverse OETF or EOTF model comprising only four parameters and corresponding to Eqn. No. 4 can be constructed as follows:

$$\text{Eqn. No. 5} \qquad L(V) = \left(\frac{c - Vst}{\min(V - s, M)}\right)^{1/n}$$

M is a constant and is, for example equal to $(-10^{-4})$. In Equation no 5, according to different implementations of the invention, n is a variable parameter or has a fixed value, e.g. equal to 1.

**Example 4**

An alternate form of the generic inverse OETF or EOTF model comprising only four parameters and corresponding to Eqn. No. 4 can be constructed as follows:

$$\text{Eqn. No. 6} \qquad L(V) = \left(\frac{c - Vst}{V - s}\right)^{1/n}$$

**Example 5**

In one example in accordance with present principles, an alternate form of the generic OETF/EOTF pairs may be used for a tone mapping use case that may occur as follows.

In one example, in post-production the director of photography and the colorist can produce a HDR grade of some content. Grading a picture (or a video) is a process of altering/enhancing the colors of the picture (or the video) in order to instill an artistic intent for a given target application (e.g, theatrical release, home entertainment, broadcast). To encode this HDR video signal footage, the OETF can be used directly, where the OETF may be based on those as described in Eqn. Nos. 1 and 4.

A low dynamic range grade can then be derived using a specific tone reproduction operator (TMO). A tone reproduction operator is intended to reduce the dynamic range of an HDR grade into a standard dynamic range (SDR) grade. In principle, many TMOs could be used for this. However, a good tone reproduction operator may be based on the following equation:

$$\text{Eqn. No. 7} \qquad T(L) = \frac{sL^n + c}{L^n + st} + m$$

This is a tone reproduction operator that is of the same form as the proposed OETF.

The resulting footage is then encoded for distribution (using for instance a MPEG video coding standard like AVC or HEVC or e.g., JPEG for a single picture). A slight variant of the OETF can then be applied to the tone-mapped content $T(L)$, prior to encoding for distribution. This variant of the OETF is:

$$\text{Eqn. No. 8} \qquad V(L) = \frac{aL + u}{L + ab} + k$$

Note that here the OETF and the TMO are of the same form, except that the exponent $n$ has been removed in the OETF. If tone reproduction is applied first and then the OETF is applied, it is possible to show that the final result has the same form as the tone-mapped content, i.e.:

$$\text{Eqn. No. 9} \qquad V\big(T(L)\big) = \frac{\frac{as+am+u}{s+m+ab}L^n + \frac{ac+stam+stu}{s+m+ab}}{L^n + \frac{c+stm+stab}{s+m+ab}} + k$$

As all variables except L are constants, this equation is of the form:

$$\text{Eqn. No. 10} \qquad V\big(T(L)\big) = \frac{a'L^n + u'}{L^n + a'b'} + k$$

In this scenario, parameters $s$, $t,c$ and $m$ could be set by the colorist to instill the creative intent. As the result after applying the OETF, i.e. $V(T(L))$, has the same functional form as $T(L)$, it can be seen that the director's intent is not affected as a result of applying the OETF.

The colorist would not have access to the exponent $n$, although it is part of the tone reproduction operator. The parameters $a, b, u, k$ as well as $n$ would be set to allow optimal encoding and transmission of the signal $T(L)$.

In this scenario, to match the director's intent, the parameters a', b' and u' in Eqn. 10 would be set to match the corresponding constants in Eqn. 9. This leads to three equations with three unknowns, namely a, b and u. Solving this system of three equations gives:

$$a = \frac{s^2 t(u' - a'st)}{u' - s^3 t^2 - a'b'c - a'st - cst + a'b's^2 t}$$

$b$

$$= \frac{-(mu' + su' - a'^{s^2}t - ms^3 t^2 - a'mst + cmst + a'b's^3 t - a'b'cm - a'b'cs + a'b'ms^2 t)}{s^2 t(u' - a'st)}$$

$$u = \frac{s^2 t(a'c - mu' - su' + a'mst)}{u' - s^3 t^2 - a'b'c - a'st + cst + a'b's^2 t}$$

These values for a, b and u (as well as k) can be used in Eqn. 8 to apply a suitable OETF to the tonemapped content T(L).

**Example 6**

In one example in accordance with present principles, a flag can be advantageously signaled to indicate if the OETF/EOTF parameters are signaled explicitly or derived from an index value or an indicator corresponding to a set of pre-defined values of parameters corresponding to matching/existing OETF/EOTF pairs. In one example, the syntax for such signaling may comprise of the following:

**Table 1: Example of syntax for coding the Generic OETF/EOTF parameters.**

| | |
|---|---|
| **transfer_function_bit_depth_minus8** | u(4) |
| **transfer_function_type_flag** | u(1) |
| **transfer_function_predefined_flag** | u(1) |
| if(transfer_function_predefined_flag) | |
|     **transfer_function_predefined_idc** | u(8) |
| else { | |
|     **tf_log2_denom** | u(10) |
|     **tf_param_s** | u(10) |
|     **tf_param_t** | u(10) |
|     **tf_param_c** | u(10) |
|     **tf_param_n** | u(10) |
|     **tf_param_m** | u(10) |
| } | |

The associated semantics may be defined as follows:

**transfer_function_bit_depth_minus8** plus 8 specifies the bit depth of the luma and chroma component or the luminance component or the RGB component of the associated pictures for purposes of interpretation of transfer function metadata:
*bit_depth* = **transfer_function_bit_depth_minus8** + 8
**transfer_function_type_flag** equal to 0 indicates that the curve model/transfer function characterizes an EOTF. **transfer_function_type_flag** equal to 1 indicates that the curve model/transfer function characterizes an OETF. When transfer_function_type_flag is not present transfer_function_type_flag is inferred to be equal to 0.
**transfer_function_predefined_flag** equal to 1 indicates that the syntax element **transfer_function_predefined_idc** is present. **transfer_function_predefined_flag** equal to 0 indicates that syntax element **transfer_function_predefined_idc** is not present (the transfer function model parameters are coded explicitly).

The semantic of **transfer_function_predefined_idc** may be defined in **Error! Reference source not found..**

**Table 2: Semantic of *transfer_function_predefined_idc*.**

| transfer function_predefined_idc | Predefined transfer function model |
|---|---|
| 0 | Barten's curve |
| 1 | SMPTE ST 2084 TF (PQ TF) |
| 2 | BBC TF |
| 3 | Philips TF |
| 4..255 | For future use by ITU-T \| ISO/IEC |

The association of transfer_function_predefined_idc and transfer_function_type_flag may allow the determination of which EOTF or OETF is modeled.

**tf_log2_denom** specifies the base 2 logarithm of the denominator for all parameters (tf_param_s, tf_param_t, tf_param_c, tf_param_n, tf_param_m). The value of tf_log2_denom shall be in the range of 0 to 15, inclusive. When not present, the value of tf_log2_denom is inferred to be equal to 0.

Alternatively, signaling in a standard (e.g., HEVC/H.265, AVC/H.264, MPEG-2, JPEG or any present or future amendments), may be inserted in a VUI/SPS/PPS/SEI syntax/structure.

**Example 7**

In one example, an aspect of present principles is directed to generic Transfer Function (TF) model parameters that may change depending on the pictures bit-depth too. In that case, one can signal the pre-defined values of parameters:
• by adding entries into Table 2 resulting into Table 3 below, such as, for example below for "Barten's curve" and SMPTE ST 2084 transfer function:

**Table 3 Semantic of *transfer_function_predefined_idc* - variant**

| transfer_function_predefi ned_idc | Predefined transfer function model |
|---|---|
| 0 | Barten's curve (10 bits) |
| 1 | Barten's curve (12 bits) |
| 2 | SMPTE ST_2084 TF (10 bits) |
| 3 | SMPTE ST 2084 TF (12 bits) |
| 4 | BBC EOTF |
| 5 | Philips EOTF |
| 6..255 | For future use by ITU-T \| ISO/IEC |

• or by selecting the pre-defined parameters as combination of *bit_depth* and **transfer_function_predefined_idc.**

Advantageously, the syntax element size used to encode the parameters may be different for some parameters.

Advantageously, the number of parameters may be variable and indicated in the syntax (see **tf_num_param_minus1** in example depicted in Table 4).

Advantageously, the parameter **tf_log2_denom** may be specified for each parameter:

**Table 4: Example of syntax for coding the Generic TF parameters.**

| | |
|---|---|
| **transfer_function_bi_depth_minus8** | u(4) |
| **transfer_function_type_flag** | u(1) |
| **transfer_function_predefined_flag** | u(1) |
| if(transfer_function_predefined_flag) | |
| **transfer_function_predefined_idc** | u(8) |
| else { | |

(continued)

| tf_num_param_minus1 | u(3) |
|---|---|
| for (i=0 ; i<= tf_num_param_minus1; i++) { | |
| tf_log2_denom[i] | u(10) |
| tf_param_value[i] | se(v) |
| } | |
| } | |

The semantics of tf_num_param_minus1 may be defined as follows:

tf_num_param_minus1 plus 1 specifies the number of parameter values defining the transfer function.

Advantageously, the parameter tf_log2_denom is not signaled for each parameter but is present in the semantics (Table 5).

Advantageously, the syntax element size of each parameter is not fixed and may be indicated with a syntax element or can be coded with Variable Length Codes (ex: u(v), se(v), ue(v), ae(v)... as defined in AVC/H.264 or HEVC/H.265).

**Table 5: Example of syntax for coding the Generic TF parameters.**

| transfer_function_bit_depth_minus8 | u(4) |
|---|---|
| transfer_function_type_flag | u(1) |
| transfer_function_predefined_flag | u(1) |
| if(otransfer_function_predefined_flag) | |
| transfer_function_predefined_idc | u(8) |
| else { | |
| tf_num_param_minus1 | u(3) |
| for (i=0 ; i<= tf_num_param_minus1; i++) | |
| tf_param_value[i] | se(v) |
| } | |

## Example 8

In one example, an aspect of present principles is directed to, in a video bit-stream, defining the parameters in an SEI of HEVC or AVC video coding standard (Table 6). As an example, the syntax is based on Table 4 however it could be directly extended to Table 1 or Table 5 or other derived syntax structure.

**Table 6: Example of syntax for coding the Generic TF parameters in an SEI message.**

| transfer_function_info(payloadSize) { | |
|---|---|
| transfer_function_id | ue(v) |
| transfer_function_cancel_flag | u(1) |
| if(!transfer_function_cancel_flag) { | |
| transfer_function_persistence_flag | u(1) |
| transfer_function_bit_depth_minus8 | u(4) |
| transfer_function_type_flag | u(1) |
| transfer_function_predefined_flag | u(1) |

(continued)

| | |
|---|---|
| if(transfer_function_predefined_flag) | |
| **transfer_function_predefined_idc** | u(8) |
| else { | |
| **tf_num_param_minus1** | u(3) |
| for (i=0 ; i<= tf_num_param_minus1; i++) { | |
| **tf_log2_denom[i]** | u(10) |
| **tf_param_value[i]** | se(v) |
| } | |
| } | |
| } | |

Supplemental semantics associated with new syntax elements with regards to Table 6 is defined as follows:

**transfer_function_id** contains an identifying number that may be used to identify the purpose of the transfer function information. The value of transfer_function_id shall be in the range of 0 to $2^{32} - 2$, inclusive.

**transfer_function_cancel_flag** equal to 1 indicates that the transfer function information SEI message cancels the persistence of any previous transfer function SEI message in output order that applies to the current layer. transfer_function_cancel_flag equal to 0 indicates that transfer function information follows.

**transfer_function_persistence_flag** specifies the persistence of the transfer function information SEI message for the current layer. transfer_function_persistence_flag equal to 0 specifies that the transfer function information applies to the current picture only.

In one example, let picA be the current picture. transfer_function_persistence_flag equal to 1 specifies that the transfer function information persists for the current layer in output order until either of the following conditions is true:

- A new CLVS of the current layer begins.
- The bitstream ends.
- A picture picB in the current layer in an access unit containing a transfer function information SEI message with the same value of transfer_function_id and applicable to the current layer is output for which PicOrderCnt(picB) is greater than PicOrderCnt(picA), where PicOrderCnt(picB) and PicOrderCnt(picA) are the PicOrderCntVal values of picB and picA, respectively, immediately after the invocation of the decoding process for picture order count for picB.

transfer_function_cancel_flag and transfer_function_persistence_flag supplemental syntax elements in Table 6 enable dealing with dynamic adaptation of the transfer function which parameters can change over time (per sequence or per picture...) or which parameters can stay persistent (per sequence or per picture...). In another embodiment those syntax elements may be not present (persistence managed directly in the semantics).

**Example 9**

In one example, an aspect of present principles is directed to, in a video bit-stream, defining the parameters in a picture parameter set (PPS). As an example, the syntax is based on Table 4 however it could be directly extended to Table 1 or Table 5 or other derived syntax structure. The fields with a *** are new in comparison with existing syntax of HEVC.

| pic_parameter_set_rbsp( ) { | Descriptor |
|---|---|
| **pps_pic_parameter_set_id** | ue(v) |
| **pps_seq_parameter_set_id** | ue(v) |
| … | |
| **pps_extension_present_flag** | u(1) |
| if( pps_extension_present_flag ) { | |
| **pps_range_extension_flag** | u(1) |
| **pps_multilayer_extension_flag** | u(1) |
| **\*\*\*   pps_hdr_extension_flag** | u(1) |
| **\*\*\*       pps_extension_5bits** | u(5) |
| } | |
| if( pps_range_extension_flag ) | |
| pps_range_extension( ) | |
| if( pps_multilayer_extension_flag ) | |
| pps_multilayer_extension( ) /* specified in Annex F */ | |
| \*\*\* if( pps_hdr_extension_flag) | |
| \*\*\*   pps_hdr_extension( ) /* specified in Annex X*/ | |
| if( pps_extension_5bits ) | |
| while( more_rbsp_data( ) ) | |
| **pps_extension_data_flag** | u(1) |
| rbsp_trailing_bits( ) | |
| } | |

**Table 7: Example of syntax for adding the Generic TF parameters in a PPS.**

Semantics of new syntax elements are:

**pps_hdr_extension_flag** equal to 1 specifies that the pps_hdr_extension() syntax structure is present in the PPS RBSP syntax structure. pps_hdr_extension_flag equal to 0 specifies that this syntax structure is not present. When not present, the value of pps_hdr_extension_flag is inferred to be equal to 0.

**pps_extension_5bits:** Because 1 bit is added for **pps_hdr_extension_flag,** change pps_extension_6bit in H.265/HEVC specification to pps_extension_5bits for the purpose of byte alignment.

Note that extension flags such as pps_extension_5bits provides flexibility for the standard to extend while keeping backward compatibility for devices implementing a previous version of the standard. New features added in extension parts will be read by new devices implementing the new standard while legacy devices implementing former standard versions will just discard those flags.

| ***pps_hdr_extension( ) { | Descriptor |
|---|---|
| ***transfer_function_ bit_depth_minus8 | u(4) |
| ***transfer_function_type_flag | u(1) |
| ***transfer_function_predefined_flag | u(1) |
| ***if( transfer_function_predefined_flag ) | |
| ***  transfer_function_predefined_idc | u(8) |
| ***else { | |
| ***  tf_num_param_minus1 | u(3) |
| ***  for ( i=0 ; i<= tf_num_param_minus1; i++ ) { | |
| ***    tf_log2_denom[i] | u(10) |
| ***    tf_param_value[i] | se(v) |
| ***  } | |
| ***} | |

**Table 8: Example of syntax for coding the Generic TF parameters in a PPS.**

**Example 10**

In one example, an aspect of present principles is directed to, in a video bit-stream, defining the parameters in a sequence parameter set (SPS). As an example, the syntax is based on Table 4 however it could be directly extended to Table 1 or Table 5 or other derived syntax structure.

| seq_parameter_set_rbsp( ) { | Descriptor |
|---|---|
| sps_video_parameter_set_id | u(4) |
| sps_max_sub_layers_minus1 | u(3) |
| sps_temporal_id_nesting_flag | u(1) |
| profile_tier_level( 1, sps_max_sub_layers_minus1 ) | |
| sps_seq_parameter_set_id | ue(v) |
| chroma_format_idc | ue(v) |
| … | |
| sps_extension_present_flag | u(1) |
| if( sps_extension_present_flag ) { | |
| sps_range_extension_flag | u(1) |
| sps_multilayer_extension_flag | u(1) |
| *** sps_hdr_extension_flag | u(1) |
| *** sps_extension_5bits | u(5) |
| } | |
| if( sps_range_extension_flag ) | |
| sps_range_extension( ) | |
| if( sps_multilayer_extension_flag ) | |
| sps_multilayer_extension( ) /* specified in Annex F */ | |
| *** if( sps_hdr_extension_flag ) | |
| *** sps_hdr_extension( ) /* specified in Annex X */ | |
| if( sps_extension_5bits ) | |
| while( more_rbsp_data( ) ) | |
| sps_extension_data_flag | u(1) |
| rbsp_trailing_bits( ) | |
| } | |

**Table 9: Example of syntax for adding the Generic TF parameters in a SPS.**

| ***sps_hdr_extension( ) { | Descriptor |
|---|---|
| ***transfer_function_ bit_depth_minus8 | u(4) |
| ***transfer_function_type_flag | u(1) |
| ***transfer_function_predefined_flag | u(1) |
| ***if( transfer_function_predefined_flag ) | |
| *** transfer_function_predefined_idc | u(8) |
| ***else { | |
| *** tf_num_param_minus1 | u(3) |
| *** for ( i=0 ; i<= tf_num_param_minus1; i++ ) { | |
| *** tf_log2_denom[i] | u(10) |
| *** tf_param_value[i] | se(v) |
| *** } | |
| ***} | |

**Table 10: Example of syntax for coding the Generic TF parameters in a SPS.**

**Example 11**

In one example, an aspect of present principles is directed to, in a video bit-stream, the indicating the parameters and defining them in the Video Usability Information (VUI). As an example, the syntax is based on Table 4 however it could be directly extended to Table 1 or Table 5 or other derived syntax structure.

| vui_parameters( ) { | Descriptor |
|---|---|
| aspect_ratio_info_present_flag | u(1) |
| if( aspect_ratio_info_present_flag ) { | |
| aspect_ratio_idc | u(8) |
| if( aspect_ratio_idc = = EXTENDED_SAR ) { | |
| sar_width | u(16) |
| sar_height | u(16) |
| } | |
| } | |
| … | |
| bitstream_restriction_flag | u(1) |
| if( bitstream_restriction_flag ) { | |
| tiles_fixed_structure_flag | u(1) |
| motion_vectors_over_pic_boundaries_flag | u(1) |
| restricted_ref_pic_lists_flag | u(1) |
| min_spatial_segmentation_idc | ue(v) |
| max_bytes_per_pic_denom | ue(v) |
| max_bits_per_min_cu_denom | ue(v) |
| log2_max_mv_length_horizontal | ue(v) |
| log2_max_mv_length_vertical | ue(v) |
| } | |
| *** transfer_function_present_flag | u(1) |
| *** if( transfer_function_present_flag) { | |
| *** transfer_function_ bit_depth_minus8 | u(4) |
| *** transfer_function_type_flag | u(1) |
| *** transfer_function_predefined_flag | u(1) |
| *** if( transfer_function_predefined_flag ) | |
| *** transfer_function_predefined_idc | u(8) |
| *** else { | |
| *** tf_num_param_minus1 | u(3) |
| *** for ( i=0 ; i<= tf_num_param_minus1; i++ ) { | |
| *** tf_log2_denom[i] | u(10) |
| *** tf_param_value[i] | se(v) |
| *** } | |
| *** } | |
| *** } | |
| ***} | |

**Table 11: Example of syntax for coding the Generic TF parameters in a VUI.**

As another example, the transfer characteristics semantics may be updated. Typically, Table E.4 of HEVC/H.265 may be updated to incorporate an embodiment of fixed parameters of the generic EOTF/OETF (that may be referred or fixed in an ITU-R or SMPTE standard) as follows:

| Value | Transfer Characteristic | | Informative Remark |
|---|---|---|---|
| 0 | Reserved | | For future use by ITU-T ∣ ISO/IEC |
| 1 | $V = \alpha * L_c^{0.45} - (\alpha - 1)$<br>$V = 4.500 * L_c$ | for $1 >= L_c >= \beta$<br>for $\beta > L_c >= 0$ | Rec. ITU-R BT.709-5<br>Rec. ITU-R BT.1361 conventional colour gamut system<br>(functionally the same as the values 6, 14, and 15) |
| 2 | Unspecified | | Image characteristics are unknown or are determined by the application. |
| 3 | Reserved | | For future use by ITU-T ∣ ISO/IEC |
| 4 | Assumed display gamma 2.2 | | Rec. ITU-R BT.470-6 System M (historical)<br>United States National Television System Committee 1953 Recommendation for transmission standards for colour television<br>United States Federal Communications Commission Title 47 Code of Federal Regulations (2003) 73.682 (a) (20)<br>Rec. ITU-R BT.1700 (2007 revision) 625 PAL and 625 SECAM |
| 5 | Assumed display gamma 2.8 | | Rec. ITU-R BT.470-6 System B, G (historical) |
| 6 | $V = \alpha * L_c^{0.45} - (\alpha - 1)$<br>$V = 4.500 * L_c$ | for $1 >= L_c >= \beta$<br>for $\beta > L_c >= 0$ | Rec. ITU-R BT.601-6 525 or 625<br>Rec. ITU-R BT.1358 525 or 625<br>Rec. ITU-R BT.1700 NTSC<br>Society of Motion Picture and Television Engineers 170M (2004)<br>(functionally the same as the values 1, 14, and 15) |
| 7 | $V = \alpha * L_c^{0.45} - (\alpha - 1)$<br>$V = 4.0 * L_c$ | for $1 >= L_c >= \beta$<br>for $\beta > L_c >= 0$ | Society of Motion Picture and Television Engineers 240M (1999) |
| 8 | $V = L_c$ | for all values of $L_c$ | Linear transfer characteristics |
| 9 | $V = 1.0 + Log10(L_c) \div 2$<br>$V = 0.0$ | for $1 >= L_c >= 0.01$<br>for $0.01 > L_c >= 0$ | Logarithmic transfer characteristic (100:1 range) |
| 10 | $V = 1.0 + Log10(L_c) \div 2.5$<br>$V = 0.0$ | for $1 >= L_c >= Sqrt(10) \div 1000$<br>for $Sqrt(10) \div 1000 > L_c >= 0$ | Logarithmic transfer characteristic (100 * Sqrt(10) : 1 range) |
| 11 | $V = \alpha * L_c^{0.45} - (\alpha - 1)$<br>$V = 4.500 * L_c$<br>$V = -\alpha * (-L_c)^{0.45} + (\alpha - 1)$ | for $L_c >= \beta$<br>for $\beta > L_c > -\beta$<br>for $-\beta >= L_c$ | IEC 61966-2-4 |
| 12 | $V = \alpha * L_c^{0.45} - (\alpha - 1)$<br>$V = 4.500 * L_c$<br>$V = -(\alpha * (-4 * L_c)^{0.45} - (\alpha - 1)) \div 4$ | for $1.33 > L_c >= \beta$<br>for $\beta > L_c >= -\gamma$<br>for $-\gamma > L_c >= -0.25$ | Rec. ITU-R BT.1361 extended colour gamut system |
| 13 | $V = \alpha * L_c^{(1 \div 2.4)} - (\alpha - 1)$<br>$V = 12.92 * L_c$ | for $1 >= L_c >= \beta$<br>for $\beta > L_c >= 0$ | IEC 61966-2-1 (sRGB or sYCC) |
| 14 | $V = \alpha * L_c^{0.45} - (\alpha - 1)$<br>$V = 4.500 * L_c$ | for $1 >= L_c >= \beta$<br>for $\beta > L_c >= 0$ | Rec. ITU-R BT.2020<br>(functionally the same as the values 1, 6, and 15) |
| 15 | $V = \alpha * L_c^{0.45} - (\alpha - 1)$<br>$V = 4.500 * L_c$ | for $1 >= L_c >= \beta$<br>for $\beta > L_c >= 0$ | Rec. ITU-R BT.2020<br>(functionally the same as the values 1, 6, and 14) |

| Value | Transfer Characteristic | Informative Remark |
|---|---|---|
| 16 | $V = (( c_1 + c_2 * L_c^n ) \div ( 1 + c_3 * L_c^n ))^m$    for all values of $L_c$<br>$c_1 = c_3 - c_2 + 1 = 3424 \div 4096 = 0.8359375$<br>$c_2 = 32 * 2413 \div 4096 = 18.8515625$<br>$c_3 = 32 * 2392 \div 4096 = 18.6875$<br>$m = 128 * 2523 \div 4096 = 78.84375$<br>$n = 0.25 * 2610 \div 4096 = 0.1593017578125$<br>for which $L_c$ equal to 1 for peak white is ordinarily intended to correspond to a display luminance level of 10 000 candelas per square metre | Society of Motion Picture and Television Engineers ST 2084 for 10, 12, 14, and 16-bit systems. |
| 17 | $V = ( 48 * L_c \div 52.37 )^{( 1 \div 2.6 )}$    for all values of $L_c$<br>for which $L_c$ equal to 1 for peak white is ordinarily intended to correspond to a display luminance level of 48 candelas per square metre | Society of Motion Picture and Television Engineers ST 428-1 |
| ***18 | $V = (sLc^n + c)/(Lc^n + st) + m$<br>c=X<br>n=X<br>s=X<br>t=X<br>m=X | Generic OETF proposed for a set of parameters with fixed values |
| 19..255 | Reserved | For future use by ITU-T \| ISO/IEC |

**Table 12 Update of transfer_characteristics example**

The above semantics is based on Eqn. No. 1 but is not limited to this version of OETF definition and could be extended to any equations described herein, and/or any equations derived from equations herein, e.g., an equation derived from Eqn. No. 1. Several entries (rows) could be added for different fixed parameters.

Above is discussed inserting the modulation value into various syntax structures, using H.265/HEVC as an example. The present principles can be applied to other standards. Except the VUI implementation example (Example 11), full backward compatibility with the existing or deployed SDR workflow is preserved.

**Example 12**

In one example, an aspect of present principles is directed to could also be implemented in a CEA (Consumer Electronics Association) standard (e.g. in an extension or an amendment of CEA-861.3). This standard may be used for instance by HDMI to convey parameterized EOTF (P-EOTF) parameters to a rendering device (e.g. a display) For instance the InfoFrame Dynamic Range and Mastering InfoFrame of CEA-861.3 defines a Static Metadata Descriptor and an EOTF (Table 13, Table 14) that can be updated as follows:

| InfoFrame Type Code | InfoFrame Type = 0x07 | | | | | |
|---|---|---|---|---|---|---|
| InfoFrame Version number | Version=0x01 | | | | | |
| Length of Info Frame | Length of following HDR Metadata InfoFrame | | | | | |
| Data Byte 1 | F17=0 | F16=0 | F15=0 | F14=0 | F13=0 | EOTF (3 bits) |
| Data Byte 2 | F27=0 | F26=0 | F26=0 | F24=0 | F23=0 | Static_Metadata_ Descriptor_ID (3 bits) |
| Data Byte 3 | Static_Metadata_Descriptor | | | | | |
| … | … | | | | | |
| Data Byte n | … | | | | | |

**Table 13 Dynamic Range and Mastering InfoFrame**

Data Byte 1 EOTF identifies the Electro-Optical Transfer Function (EOTF) used in the stream.

| EOTF | EOTF of stream |
|---|---|
| 0 | Traditional gamma - SDR Luminance Range |
| 1 | Traditional gamma - HDR Luminance Range |
| 2 | SMPTE ST 2084 [**Error! Reference source not found.**] |
| ***3 | Parameterized EOTF |
| 4- 7 | Reserved for future use |

**Table 14 Data Byte 1 - Electro-Optical Transfer Function**

Data Byte 2 Static_Metadata_Descriptor_ID identifies the structure used in Data Byte 3 and higher.

| Static_Metadata_ Descriptor_ID | Metadata Descriptor |
|---|---|
| 0 | Static Metadata Type 1 |
| ***1 | Static Metadata Type 2 (P-EOTF parameters) |
| 2 - 7 | Reserved for future use |

**Table 15 Data Byte 2 - Static_Metadata_ID**

When Static_Metadata_Descriptor_ID = 1, Static_Metadata_Descriptor uses the structure defined in Table 16 that was defined for parameterized EOTF parameters identification.
Static Metadata Type 2 may define P-EOTF parameters as follows:

| Data Byte number | Contents |
|---|---|
| ***Data Byte 3 | peotf_param_s, LSB |
| ***Data Byte 4 | peotf_param_s, MSB |
| ***Data Byte 5 | peotf_param_t, LSB |
| ***Data Byte 6 | peotf_param_t, MSB |
| ***Data Byte 7 | peotf_param_c, LSB |
| ***Data Byte 8 | peotf_param_c, MSB |
| ***Data Byte 9 | peotf_param_n, LSB |
| ***Data Byte 10 | peotf_param_n, MSB |
| ***Data Byte11 | peotf_param_m, LSB |
| ***Data Byte 12 | peotf_param_m, MSB |

**Table 16 Static Metadata Descriptor Type 2 (P-EOTF)**

Semantics is same as proposed in Table 1.

**Example 13**

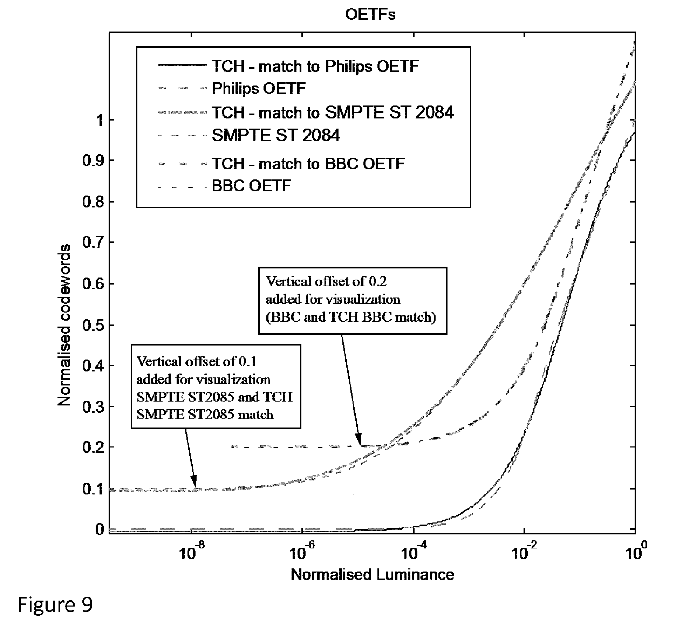

In one example, an aspect of present principles is directed to predefined values of the parameters (e.g., parameters (*s,t,c,n,m*)). In one example, the parameters of the OETF curve may be optimized against various existing OETFs as well as Barten's CSF, leading to a set of suggested predefined parameters (along with an error measure). For example, Fig. 9 illustrates results showing the TCH function in accordance with present principles optimized against existing OETF standard or standard proposals.

The parameters of the mathematical model shown in Fig. 9 were generated based on 1000 data points logarithmically spaced between the black level and the peak luminance (indicated in Tables 17-20, below; linear spacing for matches against Philips's OETF). In one example, the number of data points may be higher than 1000 or lower than 1000. One example, the spacing of the data points may be logarithmic with extra data points inserted near the black level and/or near the peak luminance. This may help the optimization process find solutions that are sufficiently accurate near the extremes of the curve.

The error is computed as the mean squared difference of the output of the generic OETF $V(L)$ in accordance with present principles and the curve/LUT $V_e(L)$ that the fit was made to:

$$\text{Eqn. No. 11} \qquad \text{Error} = \frac{1}{n}\sum_n (V(L) - V_e(L))^2$$

The Error is an indicator of the closeness between the parameterized OETF model in accordance with present principles and the OETF (standard, proposed standard, future standard or custom) that is being matched or modeled. The error computed in Eqn. 11 is one example of a suitable error metric. One example may use the $L_1$ norm on $V(L)$ and $V_e(L)$.

**Table 17**

| Test conditions: | | | |
|---|---|---|---|
| Peak: | $10^4$ *cd/m²* | | |
| Black: | $10^{-3}$ *cd/m²* | | |
| Codewords: | 4096 (12-bit full range) | | |
| Parameter | Barten's curve (f = 0.9078) | SMPTE ST 2084 | Philips EOTF |
| *s* | 1.5000 | 1.4417 | 1.0667 |
| t | 3.8408 | 4.4059 | 21.245 |
| *c* | -1.1103 | -1.1146 | -9.7546 |
| *n* | 0.25451 | 0.27182 | 0.46363 |
| *m* | 0.097763 | 0.10817 | 0.2885 |
| Error | $5.10*10^{-6}$ | $2.697*10^{-6}$ | $5.2488*10^{-5}$ |

**Table 18**

| Test conditions: | | | |
|---|---|---|---|
| Peak: | $10^4$ *cd/m²* | | |
| Black: | 0.005 *cd/m²* | | |
| Codewords: | 4096 (12-bit full range) | | |
| Parameter | Barten's curve (f = 0.89222) | SMPTE ST 2084 | Philips EOTF |
| *s* | 1.5312 | 1.4598 | 1.0695 |
| *t* | 3.6965 | 4.2899 | 21.0024 |
| *c* | -1.1959 | -1.1213 | -9.6815 |
| *n* | 0.24959 | 0.2681 | 0.46248 |
| *m* | 0.09586 | 0.10526 | 0.28698 |

(continued)

| Parameter | Barten's curve (f = 0.89222) | SMPTE ST 2084 | Philips EOTF |
|---|---|---|---|
| Error | $3.8983*10^{-6}$ | $1.913*10^{-6}$ | $5.1925*10^{-5}$ |

**Table 19**

Test conditions:
Peak: $10^4$ $cd/m^2$       Offset *m* removed from model
Black: $10^{-3}$ $cd/m^2$
Codewords: 4096 (12-bit full range)

| Parameter | Barten's curve (f = 0.9078) | SMPTE ST 2084 | Philips EOTF |
|---|---|---|---|
| *s* | 1.4707 | 1.5475 | 1.2465 |
| *t* | 4.3636 | 4.1120 | 32.9662 |
| *c* | -0.28519 | -0.42305 | -2.3399 |
| *n* | 0.28557 | 0.27237 | 0.55642 |
| *m* | 0 | 0 | 0 |
| Error | $1.0021*10^{-5}$ | $2.7011*10^{-6}$ | $5.3659*10^{-5}$ |

**Table 20**

Test conditions:
Peak: $10^4$ $cd/m^2$       Offset *m* removed from model
Black: 0.005 $cd/m^2$
Codewords: 4096 (12-bit full range)

| Parameter | Barten's curve (f = 0.89222) | SMPTE ST 2084 | Philips EOTF |
|---|---|---|---|
| *s* | 1.4768 | 1.5624 | 1.2466 |
| *t* | 4.3301 | 4.0159 | 32.9224 |
| *c* | -0.35758 | -0.45706 | -2.3493 |
| *n* | 0.28497 | 0.2687 | 0.55628 |
| *m* | 0 | 0 | 0 |
| Error | $9.8265*10^{-6}$ | $1.9174*10^{-6}$ | $5.3517*10^{-5}$ |

**Example 14**

In one example in accordance with present principles, the parameters for the parameterized generic OETF/EOTF models may be generated as follows in accordance with present principles.

**OETF Optimization**

The generic curves described above in accordance with present principles require several parameters. These parameters depend on the use case or on which pre-existing curve needs to be modeled. An optimization procedure may be employed to determine the values of these parameters in accordance with present principles. The same parameters are then employed for the corresponding EOTF (or inverse OETF).

The OETF curve to be optimized against can be given as a look-up table (LUT) or as a function. Assuming that there is a range of luminance values for which the OETF $V(L)$ is desired to match an existing OETF $V_e(L)$, then the following optimization problem is solved:

Eqn. No. 12

$$\arg\min_{parameters\ (e.g.,s,t,c,n,m)}\|V_e(L) - V(L; parameters\ (e.g.,s,t,c,m,n))\|^2$$

where $V_e(L)$ can be any given existing OETF, or it can be a LUT derived from contrast sensitivity functions. $L$ may be a number of values within a range of values (e.g., 1000 values, spaced logarithmically over the luminance range under investigation).

Each variable or each parameter may be individually optimized. If the error obtained for this optimization is lower than the previous error, the new value for that variable is stored. Otherwise the old value is stored.

Once each variable/parameter has been optimized once, the procedure is repeated. This process is repeated a fixed number of times (for instance 10000 times), or until the error has not reduced. During each iteration of this iterative scheme, the parameters are updated to values determined by the optimization only if they result in a smaller error. Otherwise, the parameters from the previous iteration are retained. By repeating the optimization in a loop, starting each loop with the previously determined optimal set of parameters, there is convergence to the global optimum solution, due to the smooth and well behaved nature of the curves for which optimization is performed.

**Look-Up Table**

In one example, a modulation transfer function, which itself is derived from a contrast sensitivity function, may be matched. In this procedure, Barten's Contrast Sensitivity Function is evaluated for all relevant combinations of luminance level and spatial frequency. For each luminance level, the maximum contrast sensitivity is found over all spatial frequencies. This produces a contrast sensitivity function as function of luminance level, CSF($L$).

The modulation transfer function is the reciprocal of contrast sensitivity and is given by:

$$\text{Eqn. No. 13} \qquad m_t(L) = \frac{1}{\text{CSF}(L)}$$

In essence, modulation transfer gives the maximum contrast at a given luminance level that is just below visible threshold. This means that subsequent luminance levels in an encoding scheme should have a contrast of at most this amount.

Contrast between two luminance levels $L_1$ and $L_2$ is often defined as Michelson contrast C, given by:

$$\text{Eqn. No. 14} \qquad C = \frac{L_1 - L_2}{L_1 + L_2}$$

Combining these two equations produces:

$$\text{Eqn. No. 15} \qquad m_t(L) = \frac{L_1 - L_2}{L_1 + L_2}$$

Solving for either $L_1$ or $L_2$ produces:

$$\text{Eqn. No. 16} \qquad \begin{aligned} L_1 &= L_2 \frac{1 - m_t(L_2)}{1 + m_t(L_2)} \\ L_2 &= L_1 \frac{1 + m_t(L_1)}{1 - m_t(L_1)} \end{aligned}$$

The interpretation of this result is that given a specific luminance level, a new luminance level can be computed that is different by exactly 1 just noticeable different (JND). In the one case, the new luminance level is 1 JND higher than the preceding value, and in the other case, the new luminance level is 1 JND lower.

In one example, a desired peak luminance and bit-depth are chosen, and with Eqn. 16 calculate a look-up table of luminance values, each 1 JND different from the preceding value. For instance, if a peak luminance of 10,000 $cd/m^2$ is chosen, with a bit-depth of 12 bits, then the last entry in the look-up table will contain a value of 10,000. The second last entry will be calculated from the last entry using Eqn. 16. The third last entry will be computed from the second last entry, and so forth.

The resulting look-up table represents an EOTF, as it converts codewords (i.e. table entries) into luminance values. If a minimum desired luminance value is given, a calculation of how many code words would be required to step between maximum and minimum luminance may be performed. This would give the number of JNDs available for that luminance range.

Inverse look-ups into this resulting look-up table would implement an OETF. This pair of functions will be denoted $L_{Barten}(V)$ and $V_{Barten}(L)$ for the EOTF and the OETF respectively.

The parameters of the OETF to this look-up table may be optimized by solving, where any number of parameters may be selected:

$$\text{Eqn. No. 17}$$

$$\arg\min_{parameters\ (e.g.,s,t,c,n,m)}\|V_{Barten}(L) -$$

$$V(L;\ parameters\ (e.g.,s,t,c,m,n))\|^2$$

**Conservative Look-Up Table**

The look-up table generated in the preceding section creates values that are precisely spaced at 1 JND. The combination of starting luminance and the number of entries in the look-up table may determine the end luminance. This is undesirable because the end luminance is difficult to predict in this manner, and may be either higher or lower than the desired black level. This is especially the case if the number of entries in the table is related to a given bit-depth (in one example, a bit-depth of 10 bits would imply a table with 1024 entries). If the combination of black level, peak luminance and bit-depth allows, it would be better to space each consecutive step by less than 1 JND.

A parameter f with a value less than one can be applied to the above formulae as follows:

$$\text{Eqn. No. 18} \qquad \begin{aligned} L_1 &= L_2 \frac{1 - f\ m_t(L_2)}{1 + f\ m_t(L_2)} \\ L_2 &= L_1 \frac{1 + f\ m_t(L_1)}{1 - f\ m_t(L_1)} \end{aligned}$$

In one example, $f = 0.9$ may be chosen for a system with a peak luminance of 10,000 $cd/m^2$, a black level of 0.001 $cd/m^2$ and a bit depth of 12 (thus producing a LUT of $2^{12} = 4096$ entries). In one example, $f = 0.918177$. For a fixed peak luminance, black level and bit depth, varying the value of f results in a family of curves.

In general, it is desirable to choose a peak luminance, a black level and a bit depth, and from this derive an optimal value of f. To achieve this, an optimization procedure can be employed. Here, an aspect of principles solves the following optimization problem:

$$\text{Eqn. No. 19} \qquad \arg\min_f \|L_{min} - L(0; L_{max}, f)\|^2$$

Here, $L_{min}$ is the desired black level and $L(0; L_{max}, f)$ is the first entry in the look-up table generated from a given peak luminance $L_{max}$, a given size of look-up table, as well as the parameter f that is being optimized. The core of this technique is to find a value of f that under the given specification of peak luminance and bit-depth produces a LUT with a black level that is as close as possible to the desired black level $L_{min}$.

The result of this procedure is a value of f that can be used in Equation 18 to create LUTs against which the parameters of the OETF and EOTF curves of the present principles can be matched. This LUT represents $V_{Barten}(L)$ in Equation 17. The parameters for the OETF are then determined by applying the optimization scheme of Equation 17. The same resulting parameters s, t, c, m and n are utilized for both the OETF and the corresponding EOTF (inverse OETF).

**Advantages of Present Principles**

An advantage of present principles is that the OETF and EOTF are represented as parameterized curves based on suitable parameter settings. The parameter settings of the parameterized curve(s) allow the selection of an OETF/EOTF pair from a variety of existing OETF and EOTF.

Another advantage of present principles is that with other parameters, the OETF/EOTF curve(s) of the present principles can be matched against Barten's contrast sensitivity model for different luminance ranges and bit-depths. As such, a family of meaningful curves can be easily derived.

Another advantage of present principles is that the model makes use of a novel formulation of the Naka-Rushton equation that under certain parameter settings is idempotent.

Another advantage of present principles is that the representation of a single curve with meaningful parameters allows a unified representation for both HDR and SDR video.

Another advantage of present principles is that rather than transmitting a LUT or the full curve, it is possible to transmit a small set of parameters to steer the signal reconstruction.

Another advantage of present principles is that for SDR target display devices, the decoding step may omit the application of the EOTF altogether. The encoding through the proposed OETF can serve as an adequate tone reproduction operator.

Another advantage of present principles is that the proposed parameterized transfer functions avoid markets fragmentation, and improves interoperability and implementability by reconciling different OETF/EOTF under a single, generic, adaptive and parameterized OETF/EOTF model.

The examples described above may be implemented within the figures described below.

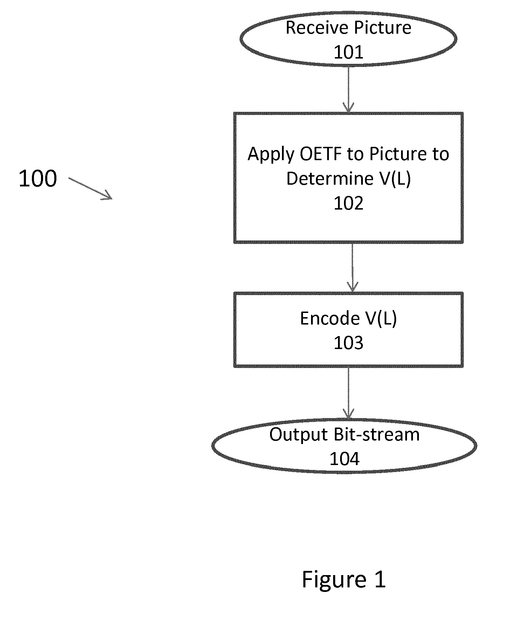

Fig. 1 is a diagram depicting an exemplary method 100 for encoding an image using OETF in a capture and distribution system. In this method 100, a picture may be received and encoded into a bit stream using any encoding technique (e.g., HEVC, AVC). Method 100 may be performed in DVB or ATSC standard based distribution workflows, production or authoring workflows, digital video camcorders.

In one example, the method 100 includes receiving a picture at block 101. The picture may be an image (picture) or video images or pictures, e.g., for HDR video. Block 101 may receive information regarding the properties of the picture, including linear light RGB information. The picture may be captured using tri-chromatic cameras into RGB color values composed of three components (Red, Green and Blue). The RGB color values depend on the tri-chromatic characteristics (color primaries) of the sensor. The picture may include image side information such as color primaries of the sensor, maximum and minimum luminance peak of the captured scene. Block 101 may then pass control to block 102, including providing any information regarding the received picture.

Block 102 may apply an OETF to the picture received at block 101. Block 102 apply the OETF to a luminance L signal of the picture to determine V(L) where V(L) is resulting electrical signal or a codeword. The luminance L signal may any of the type described herewith in accordance with present principles. The V(L) signal may any of the type described herewith in accordance with present principles. The OETF may be applied to the luminance of each pixel of the received picture to determine V(L) for each pixel of the received picture. For example, block 102 may apply the OETF to an initial RGB value of each pixel of the received picture to compute a new R'G'B value for each pixel of the received picture. The result may then be a R'G'B' picture composed of R'G'B' pixels. The resulting R'G'B' picture may then be converted from an R'G'B' picture to a Y'CbCr picture when considering traditional non constant luminance workflows. A Y'CbCr signal is said to be constant luminance or non-constant luminance depending on the luminance workflow used to derive it. Y'CbCr is non-constant luminance signal when it is derived directly from R'G'B' (non-linear-light primaries) while it is a constant luminance signal when it is derived from RGB (linear-light primaries) via Y and Y'R'B' for chroma or chrominance components. Former ITU recommendations (ITU-R BT.709 for analogic HDTV signals and ITU-R BT.1361 for digital HDTV signals) are limited to the non-constant luminance workflow. New ITU-R BT.2020 defines both luminance workflows for wide color gamut video signals. Alternatively, block 102 may apply the OETF to an initial Y value of each pixel of the received picture to compute a new Y' value for each pixel of the received picture (constant luminance workflow). Block 102 thus may optimize capture light information for human vision. Block 102 may then pass control to block 103.

Block 103 may encode the received V(L) signal. In one example, the block 103 may encode the V(L) signal in accordance with any existing encoding/decoding standard. For example, block 103 may encode in accordance with the High Efficiency Video Coding (HEVC) standard organized by the International Telecommunication (ITU) and the organization Moving Picture Experts Group (MPEG). Alternatively, the block 103 may encode in accordance with the H.264 or MPEG-4 Part 10, Advanced Video Coding (MPEG-4 AVC) organized by the International Organization for Standardization/International Electrotechnical Commission (ISO/IEC) Moving Picture Experts Group-4 (MPEG-4). Alternatively, the block 103 may encode with any other known encoding techniques. Block 103 may then pass control to block 104. Block 104 may output the resulting bit-stream (e.g., HEVC bit-stream).

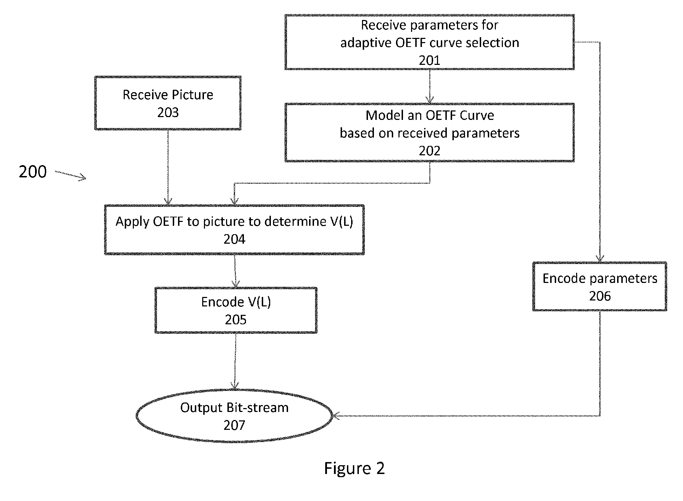

Fig. 2 is a diagram depicting an exemplary method 200 for encoding a picture using a parameterized OETF in accordance with present principles. In one example, the method 200 includes a block 201. The block 201 may receive parameters for adaptive OETF curve selection. In one example, the block 201 may receive values for one or more parameters that allow the adaptive selection of an OETF curve best suited for the content being encoded. In one example, the block 201 may receive values for a plurality of parameters, (e.g., parameters (s, t, c, m, n) described above). In another example, the block 201 may receive an identification (e.g., an indicator) of a set of fixed parameters that correspond with a certain OETF curve that may be desired for encoding the present content. The parameters may be any parameters discussed herewith in accordance with present principles. The block 201 may then pass control to block 202.

Block 202 may model an OETF curve (e.g., Barten curve, SMPTE ST 2084 OETF, BBC OETF) based on the parameters received from block 201. For example, block 202 may model a Barten OETF curve based on the received parameters. Alternatively, block 202 may model a SMPTE ST 2084 OETF similar in performance as the OETF curve proposed by Dolby. Alternatively, block 202 may model an OETF curve similar in performance to the OETF curve proposed by BBC. Alternatively, block 202 may model an OETF similar to other existing or future proposals. Block 202 may receive the parameters from block 201 and may produce an OETF curve based on those parameters. In one example, block 202 may apply the parameters to a generic OETF model (e.g., the models described above, including Eqn. Nos. 1, 4, 8-10) in order to mimic or model the behavior of any one of a plurality of OETF curves (e.g., standard OETF curve proposals or custom OETF curves). Thus, depending on the received parameters, block 202 may utilize only one of the generic OETF model to advantageously model the behavior of any OETF curve. In one example, block 202 may encode the resulting OETF curve into a look-up table (LUT). An LUT may be derived from tabulated values of the OETF formula then required intermediate values may be interpolated if they do not exist in the LUT. The interpolation may be linear. In another example, the interpolation may be non-linear. Block 202 may then pass control to block 204.

The method 200 may further include a block 203 that may receive a picture, such as video image frame, e.g., for HDR video. Block 203 may then pass control to block 204.

Block 204 may receive the picture from block 203 and the modeled OETF curve (that could be represented by a LUT for instance) from block 204. Block 204 may apply the OETF to the received picture from block 203 to determine V(L), in accordance with present principles, including those described in connection to Fig. 1. V(L) may be the resulting electrical signal from the transformation of the luminance signal L. V(L) may be a codeword. V(L) may be defined in accordance with present principles described herewith. The block 204 may determine V(L) in accordance with the principles discussed in connection with Fig. 1. For example, block 204 may apply the OETF curve modeled at block 202, including any equation described above (e.g., Eqn. Nos. 1, 4, 8-10). The OETF curve may be represented based on the received parameters as applied to any equation described above (e.g., Eqn. Nos. 1, 4, 8-10). Block 204 may apply an OETF curve in accordance with present principles to determine an absolute or relative modified luminance/RGB value or a modified luminance Y that is a linear combination of RGB values. In one example, block 204 may apply an OETF curve using an LUT as described above. Block 204 may then pass control to block 205.

Block 205 may encode V(L) received from block 204. The block 205 may encode the modified V(L) in accordance with the principles discussed in connection with Fig. 1. Block 205 may then pass control to block 207.

Method 200 may further include a block 206. The block 206 may encode directly parameters representative of the modeled OETF curve or may encode an indicator (e.g., index) of the parameters. For example, the block 206 may encode the received parameters' values (e.g., parameter values for parameters (s, t, c, m, n)). Alternatively, the block 206 may encode a predefined indicator (e.g., in an SEI message) that corresponds to a predefined set of received parameters' values. Block 206 may then pass control to block 207.

Block 207 may output the bit-stream that includes the encoded modified luminance picture from block 205 and the encoded parameters identification from block 206. Block 207 may insert the encoded parameters received from block 206 into the bit-stream. For example, block 207 may insert an encoded indicator into a predefined syntax structure (e.g., into an SEI message or a PPS, or an SPS or a VUI...).

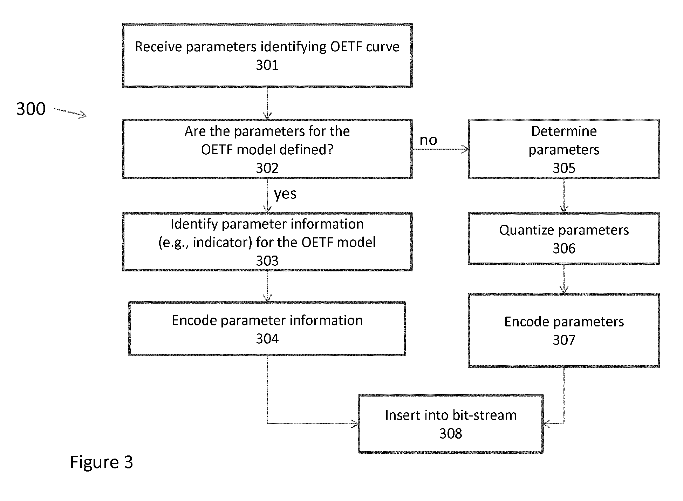

Fig. 3 is a diagram depicting an exemplary method 300 for encoding parameters of a parameterized OETF in accordance with present principles. The method 300 provides a process for encoding the parameter syntax elements in accordance with present principles. The method 300 includes a block 301.

The block 301 may receive parameters identifying an OETF curve curve (e.g. a custom OETF, a modulation transfer function derived from Barten's Contrast Sensitivity Function, SMPTE ST 2084 OETF, BBC OETF). The parameters may be any parameters discussed herewith in accordance with present principles. Block 301 may receive an information of the type of information (explicit coding of parameters or coding of an indicator representative of fixed parameters) representative of a modeled curve for the purpose of the present encoding. The block 301 may then pass control to block 302.

Block 302 may then determine how the OETF model parameters are defined. The block 302 may determine if the parameters (e.g., parameters (s, t, c, m, n)) are predefined for the OETF identified at block 301. In one example, block 302 may determine whether the identified OETF curve has known parameters (e.g., sctmn known) = indicator (meaning the parameters are predefined) or block 302 may determine whether parameters are to be explicitly given (sctmn)). In one example, block 302 may determine whether there is an indicator indicating that parameters are predefined (e.g., the parameters are predefined for a certain parameter set) or whether the parameters need to be explicitly signaled. If block 302 determines that the parameters are predefined, then it may pass control to block 303. Alternatively, if block 302 determines that the parameters are not predefined, then it may pass control to block 305.

Block 303 may identify parameter information (e.g., an indicator) for the OETF model identified by block 301.

For example, block 303 may identify an indicator corresponding to predefined parameters for the identified OETF model (e.g., an indicator indicating parameters for modeling behavior of the Barten's curve, SMPTE ST 2084 OETF, BBC OETF, etc.). Block 303 may thus encode implicit identification of the parameters. Block 303 may pass control to block 304.

Block 304 may encode the parameter information into the bit-stream. For example, block 304 may encode an indicator identifying the predefined parameters for the OETF model. Block 304 may pass control to block 308.

Block 305 may determine the parameters for the identified OETF curve. For example, block 305 may identify parameters for Eqn. Nos. 1, 4, 8-10 above (e.g., parameters (s, t, c, m, n)). Block 305 may then pass control to block 306.

Block 306 may quantize the parameters determined by block 305. Block 306 may quantize the parameters because the parameter values derived from the equations may be floating point. In this case values must be quantized in order to be transported in a bit-stream that may tolerate only integer values (e.g., AVC, HEVC) to leverage decoder processing architecture. Block 306 may then pass control to block 307.

Block 307 may encode the determined parameters. For example, block 307 may encode the values of the explicitly determined parameters. Alternatively, block 307 may encode an indicator identifying the determined parameters for the OETF model.

Block 308 may insert the encoded data into the bit stream. In one example, block 308 may populate metadata format (e.g., SEI parameter) with the encoded parameters received from either block 304 or 307.

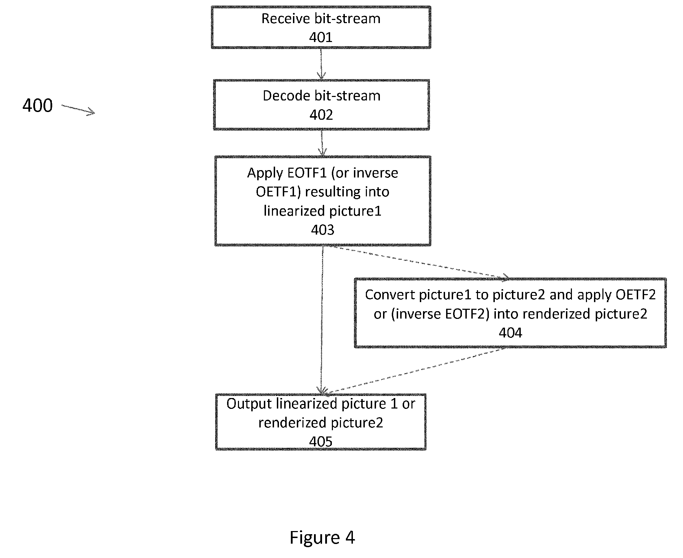

Fig. 4 is a diagram depicting an exemplary method 400 for decoding a digital picture using EOTF or inverse OETF, for example in a distribution and rendering system. In this method 400, an encoded bit-stream may be received and decoded using any decoding technique (e.g., HEVC, AVC). Method 400 may be performed by a mobile device; a communication device ; a game device; a tablet (or tablet computer) ; a laptop; a display; a still picture camera; a video camera; a decoding chip; a still picture server; a Blu-ray player; and a video server (e.g. a broadcast server, a video-on-demand server or a web server). Method 400 may also be performed in any other device or system of the like.

Method 400 includes a block 401. The block 401 may receive a bit-stream corresponding to a video sequence of digital pictures or a digital picture. The bit-stream may be encoded (e.g., using based on AVC, HEVC, etc. encoding). In one example, the digital picture may be a compressed picture that has been encoded (e.g., using JPEG, AVC, HEVC encoders). In another example, the digital picture may be digitized or quantized picture without compression and block 401 may pass control to block 403. The block 401 may then pass control to block 402.

The block 402 may decode the bit-stream received from block 401. In one example, block 402 may decode the bit stream using HEVC based decoding. In one example, block 402 may decode a digital picture. In one example, block 402 may decode a Y'CbCr picture. Block 402 may then derive an $R_1'G_1'B_1'$ picture from the Y'CbCr picture. In another example, block 402 may decode a $R_1'G_1'B_1'$ picture. Block 402 may then pass control to block 403.

Block 403 may then apply a first EOTF (EOTF1) or a first inverse OETF1 to the a V(L) signal representing a picture decoded from the bit-stream in block 402. V(L) may be defined in accordance with present principles described herewith. In one example, EOTF1 or inverse OETF1 may be applied to each pixel. In one example, the EOTF1 or inverse OETF1 may be applied to the Y' value of each pixel. In one example, the EOTF1 or inverse OETF1 may be applied to the $R_1'G_1'B_1'$ of each pixel. The resulting picture may be known as a first linearized luminance picture (e.g., $R_1G_1B_1$ picture or $YR_1B_1$ picture). In one example the EOTF1 or inverse OETF1 may be performed by creating a Look Up Table (LUT) with tabulated values (e.g., based on Eqn. Nos. 2, 3, 5 or 6) and then applying the LUT on the content to be mapped/demapped.

Block 403 may then pass control to optional block 404. Optional block 404 may optionally be performed on the first linearized luminance picture received from block 403. Block 404 may convert the first linearized luminance picture 1 into a picture 2. In one example, block 404 may convert a picture $R_1G_1B_1$ to a picture $R_2G_2B_2$. The picture 2 may be represented in a color space determined by the color primaries of the renderer (e.g., SMPTE RP 177 describes how to compute this conversion with primaries of the renderer and results are given in BT.709, BT.2020, etc.). Block 404 may then apply an OETF2 or an inverse EOTF2 to the picture 2. The result may be a renderized picture 2 that is consistent with the capabilities of the renderer. Block 404 may then pass control to block 405.

Block 405 may output either the renderized picture 2 from block 404, if block 404 is performed, or the linearized luminance picture from block 403 if block 404 is not performed. In one example, block 405 may output the picture to an image processing pipeline that displays the image and/or video containing the image.

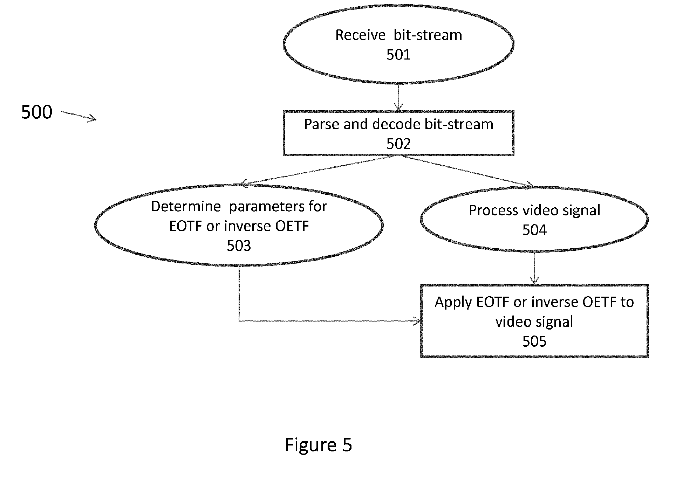

Fig. 5 is a diagram depicting an exemplary method 500 for decoding parameters of a parameterized EOTF or inverse parameterized OETF in accordance with present principles. The method 500 provides a process for decoding the parameter syntax elements in accordance with present principles. The parameters may be any parameters discussed herewith in accordance with present principles. The method 500 includes a block 501.

Block 501 may receive a bit-stream corresponding to a video sequence. The received bit-stream is encoded (e.g., using AVC, HEVC, etc. encoding). Block 502 may then pass control to block 502.

Block 502 may parse and decode the bit-stream received from block 501. In one example, the block 502 may parse and decode the bit-stream using HEVC based decoding. Block 502 may then pass control to blocks 503 and 504.

Block 503 may determine EOTF or inverse OETF parameters from the decoded bit-stream in block 502. In one example, the parameters (s, t, c, m, n) are determined based off of syntax contained in the bit-stream (e.g., an SEI message). Block 503 may then pass control to block 505.

Block 504 may process the video signal decoded in block 502. In one example, block 504 may process a decoded Y'CbCr video signal. In one example, block 504 may convert a Y'CbCr video signal to a R'G'B' video signal. In another example, block 504 may process a R'G'B' video signal. Block 504 may then pass control to block 505.

Block 505 may then apply an EOTF or inverse OETF to the video signal V(L) from block 504 based on the parameters received from block 503. V(L) may be defined in accordance with present principles described herewith. In one example, block 505 may convert video signal from R'G'B' to a linear light RGB. In one example, block 505 may apply an EOTF or an inverse EOTF based on Eqn. Nos. 2, 3, 5 or 6. In one example, block 505 may create a Look Up Table (LUT) with tabulated values (e.g., based on Eqn. Nos. 2, 3, 5 or 6) and then applying the LUT on the content to be mapped/demapped.

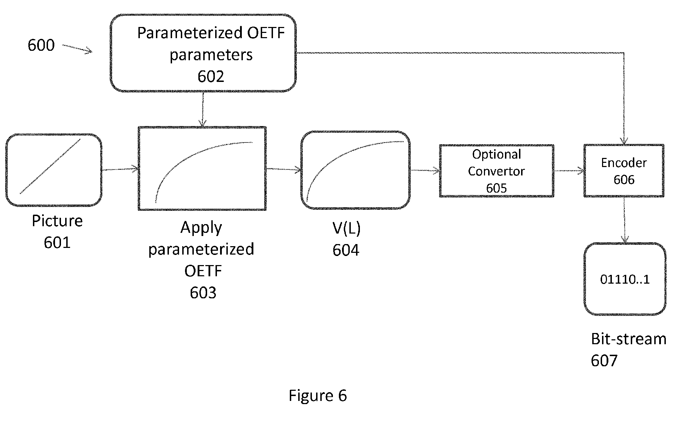

Fig. 6 is a diagram depicting an exemplary scheme 600 of encoding a picture using a parameterized OETF in accordance with present principles. Fig. 6 includes a block 601 that provides a picture. In one example, the picture may be an RGB linear light picture. In another example, the picture may be a YRB picture. Block 602 provides parameters (e.g., (s, t, c, n, m)) for a parameterized OETF in accordance with present principles. Block 602 may generate a parameterized OETF. Block 603 may apply a parameterized OETF based on the parameters from block 602 to the picture received from block 601 in accordance with present principles described above, including in connection with Figs. 1-3. In one example, the result of block 603 may be a resulting V(L) electrical signal at block 604. In one example, V(L) may be a a R'G'B' picture. In another example, V(L) may be a Y'CbCr picture. Scheme 600 may include an optional convertor 605 which may convert an R'G'B' picture to Y'CbCr picture. The output of convertor 605 may be provided to a video encoder 606 (e.g., an HEVC encoder). The encoder 606 may encode the picture and output a bit stream at block 607.

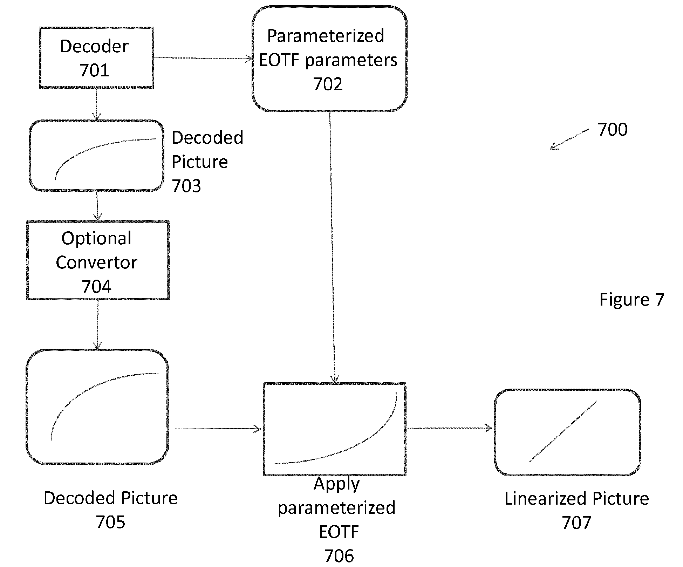

Fig. 7 is a diagram depicting an exemplary scheme 700 of decoding a digital picture using a parameterized EOTF or inverse OETF in accordance with present principles. Fig. 7 includes a decoder 701 that may decode and output at block 702 parameters for a parameterized EOTF (or inverse OETF) in accordance with present principles. Decoder 701 may further decode and output at block 703 a decoded picture. In one example, the picture may be a Y'CbCr picture. In another example, the picture may be a R'G'B' picture. An optional convertor 704 may convert an Y'CbCr picture into a R'G'B' picture and output the R'G'B' picture at block 705. Block 706 may apply a parameterized EOTF (or inverse OETF) to the picture from block 705 based on the parameters received from block 702 in accordance with present principles described above, including in connection with Figs. 1-3. Block 706 may output the resulting linearized picture at block 707. In one example, the linearized light picture may be a linear light RGB picture. In another example, the linearized light picture may be a linear light YRB picture.

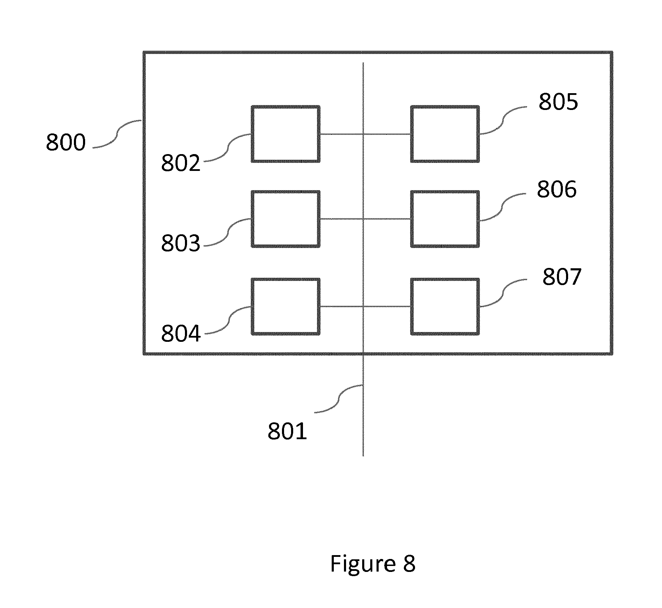

Fig. 8 represents an exemplary architecture of a device 800 which may be configured to implement methods described in relation with Fig. 1-7. In one example, Fig. 8 represents an apparatus that may be configured to implement the encoding method according to present principles, including principles described in relation to Figs. 1-3 and 6 . In one example, Fig. 8 represents an apparatus that may be configured to implement the decoding method according to present principles, including principles described in relation to Figs. 4-5 and 7.

Device 800 comprises following elements that are linked together by a data and address bus 801:

- a microprocessor 802 (or CPU), which is, for example, a DSP (or Digital Signal Processor);
- a ROM (or Read Only Memory) 803;
- a RAM (or Random Access Memory) 804;
- an I/O interface 805 for reception of data to transmit, from an application; and
- a battery 806

According to a variant, the battery 806 is external to the device. In each of mentioned memory, the word « register » used in the specification can correspond to area of small capacity (some bits) or to very large area (e.g. a whole program or large amount of received or decoded data). ROM 803 comprises at least a program and parameters. Algorithm of the methods according to the invention is stored in the ROM 803. When switched on, the CPU 802 uploads the program in the RAM and executes the corresponding instructions.

RAM 804 comprises, in a register, the program executed by the CPU 802 and uploaded after switch on of the device 800, input data in a register, intermediate data in different states of the method in a register, and other variables used for the execution of the method in a register.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

According to a specific example of encoding or encoder, the image or picture I is obtained from a source. For example, the source belongs to a set comprising:

- a local memory (803 or 804), e.g. a video memory or a RAM (or Random Access Memory), a flash memory, a ROM (or Read Only Memory), a hard disk ;
- a storage interface (805), e.g. an interface with a mass storage, a RAM, a flash memory, a ROM, an optical disc or a magnetic support;
- a communication interface (805), e.g. a wireline interface (for example a bus interface, a wide area network interface, a local area network interface) or a wireless interface (such as a IEEE 802.11 interface or a Bluetooth® interface); and
- an image capturing circuit (e.g. a sensor such as, for example, a CCD (or Charge-Coupled Device) or CMOS (or Complementary Metal-Oxide-Semiconductor)).

According to different embodiments of the decoding or decoder, the decoded image I is sent to a destination; specifically, the destination belongs to a set comprising:

- a local memory (803 or 804), e.g. a video memory or a RAM, a flash memory, a hard disk;
- a storage interface (805), e.g. an interface with a mass storage, a RAM, a flash memory, a ROM, an optical disc or a magnetic support;
- a communication interface (805), e.g. a wireline interface (for example a bus interface (e.g. USB (or Universal Serial Bus)), a wide area network interface, a local area network interface, a HDMI (High Definition Multimedia Interface) interface) or a wireless interface (such as a IEEE 802.11 interface, WiFi ® or a Bluetooth ® interface); and
- a display.

According to different examples of encoding or encoder, the bitstream BF and/or F are sent to a destination. As an example, one of bitstream F and BF or both bitstreams F and BF are stored in a local or remote memory, e.g. a video memory (804) or a RAM (804), a hard disk (803). In a variant, one or both bitstreams are sent to a storage interface (805), e.g. an interface with a mass storage, a flash memory, ROM, an optical disc or a magnetic support and/or transmitted over a communication interface (805), e.g. an interface to a point to point link, a communication bus, a point to multipoint link or a broadcast network.

According to different examples of decoding or decoder, the bitstream BF and/or F is obtained from a source. Exemplarily, the bitstream is read from a local memory, e.g. a video memory (804), a RAM (804), a ROM (803), a flash memory (803) or a hard disk (803). In a variant, the bitstream is received from a storage interface (805), e.g. an interface with a mass storage, a RAM, a ROM, a flash memory, an optical disc or a magnetic support and/or received from a communication interface (805), e.g. an interface to a point to point link, a bus, a point to multipoint link or a broadcast network.

According to different examples, device 800 being configured to implement an encoding method in accordance with present principles, belongs to a set comprising:

- a mobile device ;
- a communication device ;
- a game device ;
- a tablet (or tablet computer) ;
- a laptop ;
- a still image camera;
- a video camera;
- an encoding chip;
- a still image server ; and
- a video server (e.g. a broadcast server, a video-on-demand server or a web server).

According to different examples, device 800 being configured to implement a decoding method in accordance with present principles, belongs to a set comprising:

- a mobile device ;
- a communication device ;
- a game device ;

- a set top box;
- a TV set;
- a tablet (or tablet computer) ;
- a laptop ;
- a display and
- a decoding chip.

Fig. 9 illustrates an example of a plot demonstrating performance results of the parameterized OETF in accordance with present principles (labeled TCH) relative to other existing OETFs. The plot may be determined based on Eqn. 1. The X axis pertains to the normalized luminance values of the picture. The Y axis pertains to the normalized codeword values of the bit-stream.

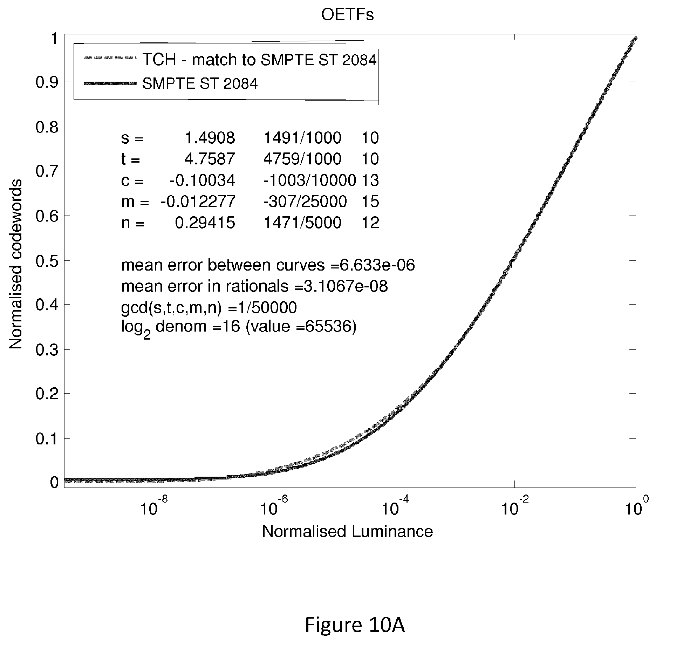

Fig. 10A illustrates an example of a plot demonstrating performance of the results of the parameterized OETF in accordance with present principles (labeled TCH) relative to SMPTE ST 2084 OETF curve. The plot may be determined based on Eqn. 1 above. The X axis pertains to the normalized luminance of the picture. The Y axis pertains to the normalized codeword values of the bit-stream.

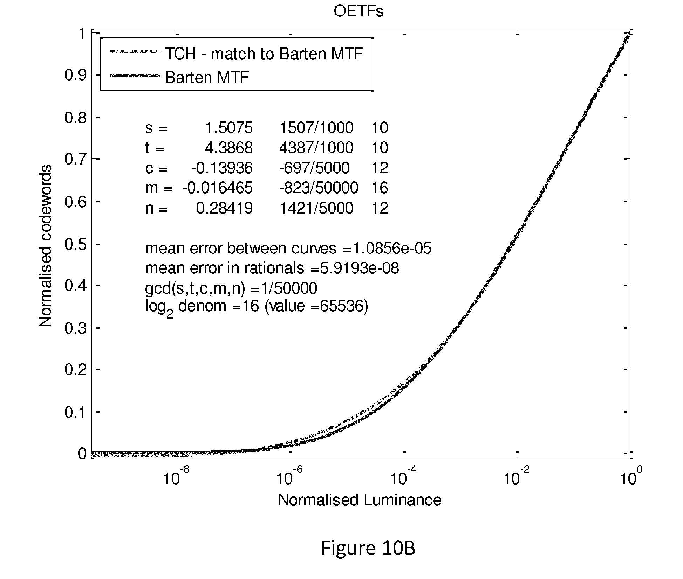

Fig. 10B illustrates an example of a plot demonstrating performance of the results of the parameterized OETF in accordance with present principles (labeled TCH) relative to Barten MTF curve. The plot may be determined based on Eqn. 1 above. The X axis pertains to the normalized luminance of the picture. The Y axis pertains to the normalized codeword values of the bit-stream. Fig. 10B further includes a look up table for the parameters.

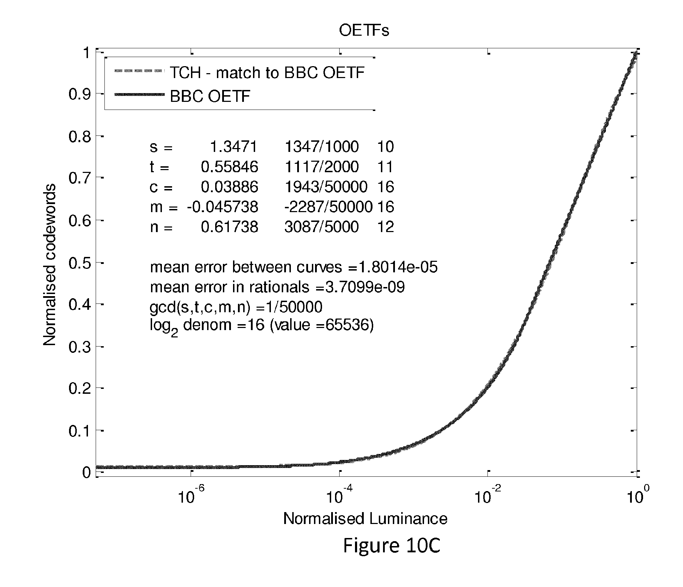

Fig. 10C illustrates an example of a plot demonstrating performance of the results of the parameterized OETF in accordance with present principles (labeled TCH) relative to BBC OETF curve. The plot may be determined based on Eqn. 1 above. The X axis pertains to the normalized luminance of the picture. The Y axis pertains to the normalized codeword values of the bit-stream. Fig. 10C further includes a look up table for the parameters.

Figs. 10A, 10B and 10C additionally show the values of parameters s, t, c, *n* and m that were used to generate the curves labelled TCH. In addition these figures show approximations of these parameter values as ratios of integers.

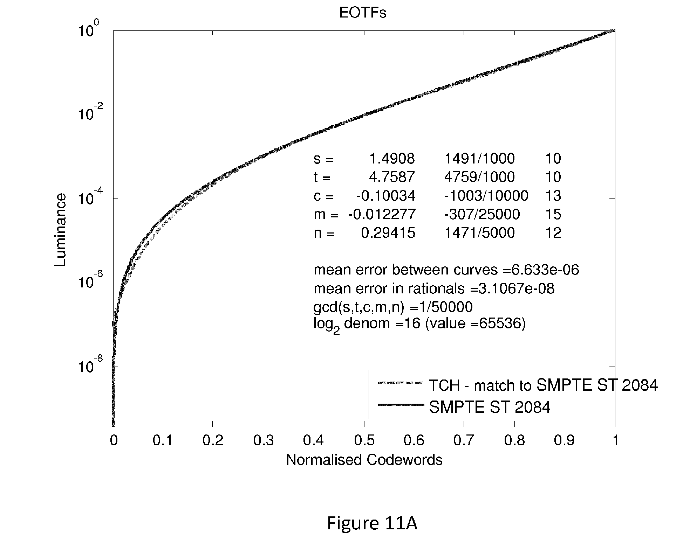

Fig. 11A illustrates an example of a plot demonstrating performance of the results of the parameterized EOTF (or inverse OETF) in accordance with present principles (labeled TCH) relative to SMPTE ST 2084 OETF curve. The plot may be determined based on Eqn. 2 above. The X axis pertains to the normalized codeword values of the bit-stream. The Y axis pertains to the normalized luminance of the picture.

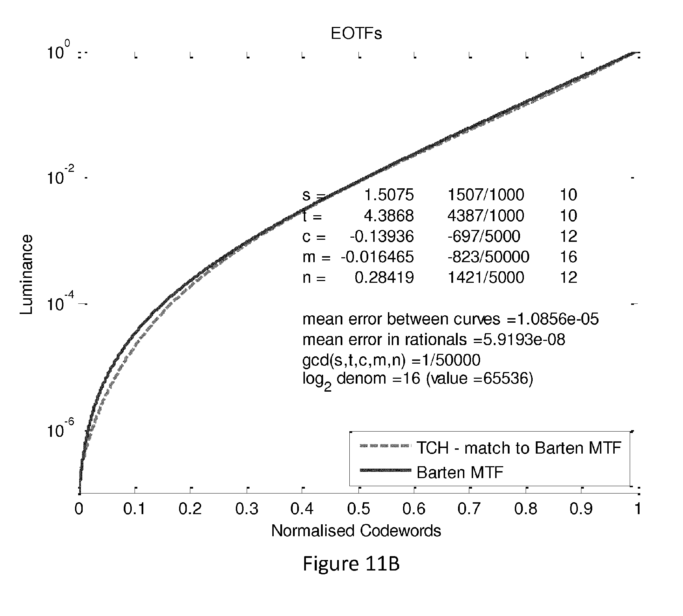

Fig. 11B illustrates an example of a plot demonstrating performance of the results of the parameterized EOTF (or inverse OETF) in accordance with present principles (labeled TCH) relative to Barten MTF curve. The plot may be determined based on Eqn. 2 above. The X axis pertains to the normalized codeword values of the bit-stream. The Y axis pertains to the normalized luminance of the picture.

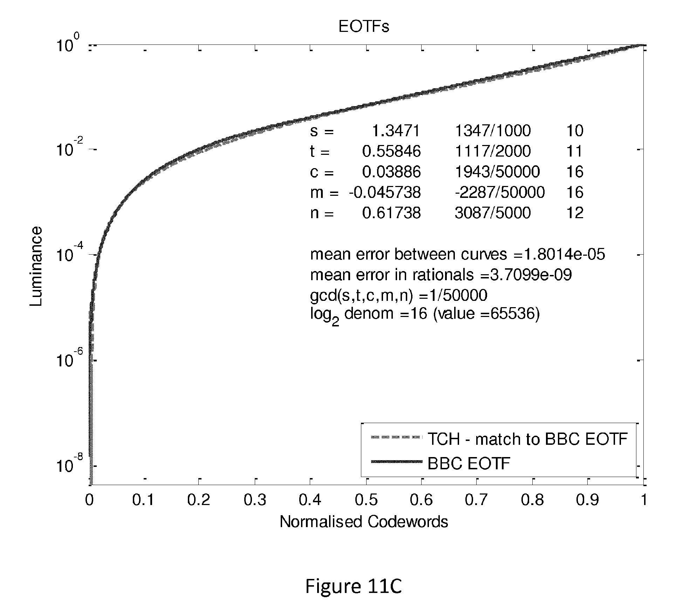

Fig. 11C illustrates an example of a plot demonstrating performance of the results of the parameterized EOTF (or inverse OETF) in accordance with present principles (labeled TCH) relative to BBC OETF curve. The plot may be determined based on Eqn. 2 above. The X axis pertains to the normalized codeword values of the bit-stream. The Y axis pertains to the normalized luminance of the picture.

Figs. 11A, 11B and 11C additionally show the values of parameters s, t, c, *n* and m that were used to generate the curves labelled TCH. In addition these figures show approximations of these parameter values as ratios of integers.

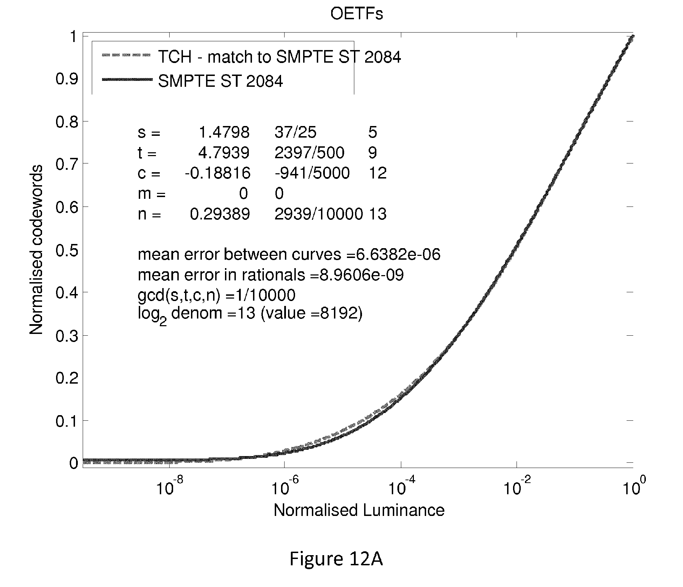

Fig. 12A illustrates an example of a plot demonstrating performance of the results of the parameterized OETF in accordance with present principles (labeled TCH) relative to SMPTE ST 2084 OETF curve. The plot may be determined based on Eqn. 4 above based on four parameters. The X axis pertains to the normalized luminance of the picture. The Y axis pertains to the normalized codeword values of the bit-stream.

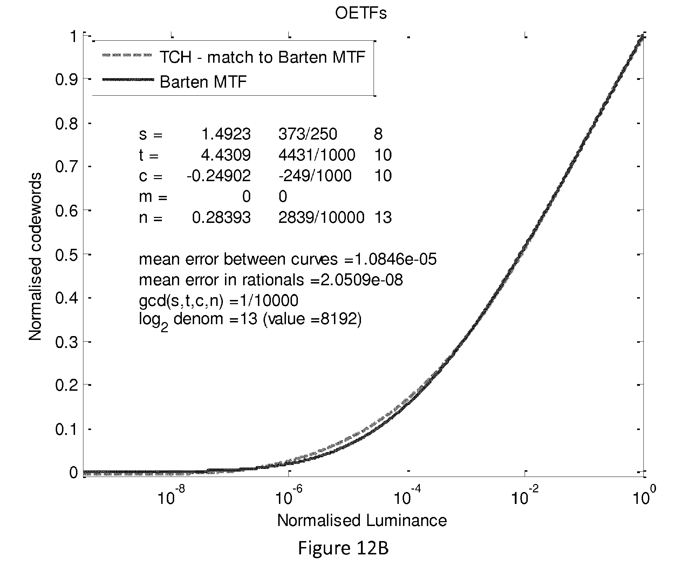

Fig. 12B illustrates an example of a plot demonstrating performance of the results of the parameterized OETF in accordance with present principles (labeled TCH) relative to Barten MTF curve. The plot may be determined based on Eqn. 4 above based on four parameters. The X axis pertains to the normalized luminance of the picture. The Y axis pertains to the normalized codeword values of the bit-stream.

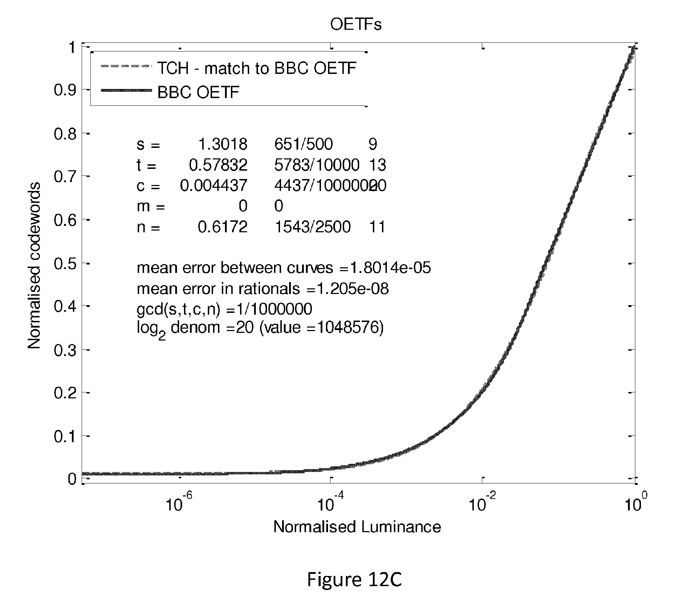

Fig. 12C illustrates an example of a plot demonstrating performance of the results of the parameterized OETF in accordance with present principles (labeled TCH) relative to BBC OETF curve. The plot may be determined based on Eqn. 4 above based on four parameters. The X axis pertains to the normalized luminance of the picture. The Y axis pertains to the normalized codeword values of the bit-stream.

Figs. 12A, 12B and 12C additionally show the values of parameters s, t, c, *n* and m that were used to generate the curves labelled TCH. In addition these figures show approximations of these parameter values as ratios of integers.

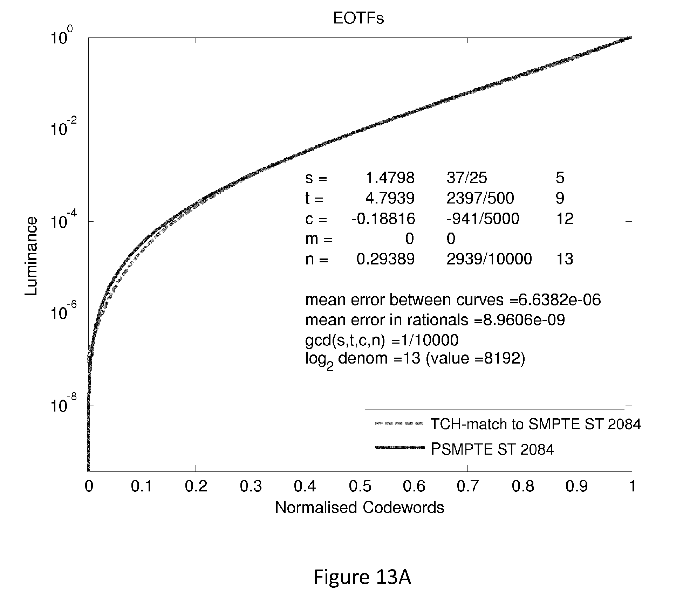

Fig. 13A illustrates an example of a plot demonstrating performance of the results of the parameterized EOTF (or inverse OETF) in accordance with present principles (labeled TCH) relative to SMPTE ST 2084 OETF curve. The plot may be determined based on Eqn. 6 above based on four parameters. The X axis pertains to the normalized codeword values of the bit-stream. The Y axis pertains to normalized luminance of the picture.

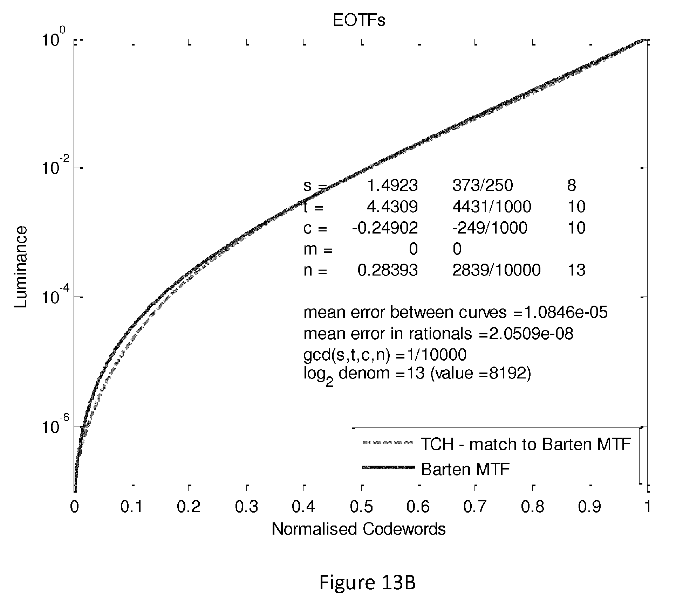

Fig. 13B illustrates an example of a plot demonstrating performance of the results of the parameterized EOTF (or inverse OETF) in accordance with present principles (labeled TCH) relative to Barten MTF curve. The plot may be determined based on Eqn. 6 above based on four parameters. The X axis pertains to the normalized codeword values of the bit-stream. The Y axis pertains to normalized luminance of the picture.

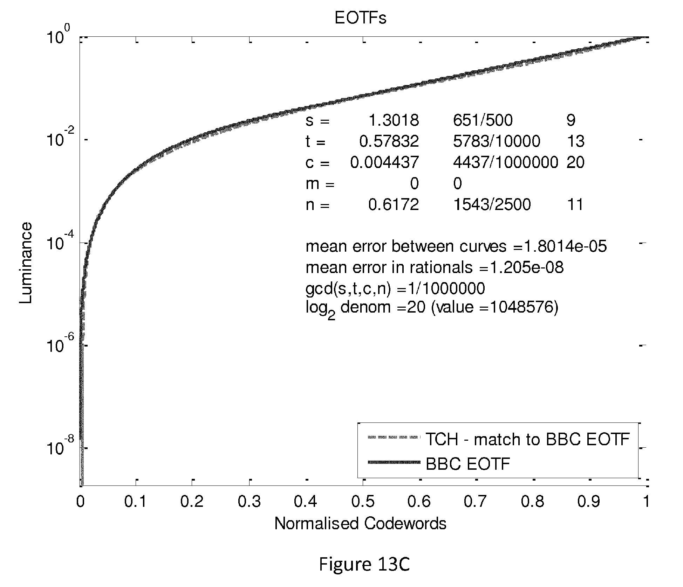

Fig. 13C illustrates an example of a plot demonstrating performance of the results of the parameterized EOTF (or inverse OETF) in accordance with present principles (labeled TCH) relative to BBC OETF curve. The plot may be determined based on Eqn. 6 above based on four parameters. The X axis pertains to the normalized codeword values of the bit-stream. The Y axis pertains to normalized luminance of the picture.

Figs. 13A, 13B and 13C additionally show the values of parameters s, t, c, n and m that were used to generate the curves labelled TCH. In addition these figures show approximations of these parameter values as ratios of integers.

Implementations of the various processes and features described herein may be embodied in a variety of different equipment or applications. Examples of such equipment include an encoder, a decoder, a post-processor processing output from a decoder, a preprocessor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described example, or to carry as data the actual syntax-values written by a described example. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

Numerous specific details have been set forth herein to provide a thorough understanding of the present invention. It will be understood by those skilled in the art, however, that the examples above may be practiced without these specific details. In other instances, well-known operations, components and circuits have not been described in detail so as not to obscure the present invention. It can be appreciated that the specific structural and functional details disclosed herein may be representative and do not necessarily limit the scope of the present invention.

Various examples of the present invention may be implemented using hardware elements, software elements, or a combination of both. Some examples may be implemented, for example, using a computer-readable medium or article which may store an instruction or a set of instructions that, if executed by a machine, may cause the machine to perform a method and/or operations in accordance with the examples. Such a machine may include, for example, any suitable processing platform, computing platform, computing device, processing device, computing system, processing system, computer, processor, or the like, and may be implemented using any suitable combination of hardware and/or software. The computer-readable medium or article may include, for example, any suitable type of memory unit, memory device, memory article, memory medium, storage device, storage article, storage medium and/or storage unit. The instructions may include any suitable type of code, such as source code, compiled code, interpreted code, executable code, static code, dynamic code, encrypted code, and the like, implemented using any suitable high-level, low-level, object-oriented, visual, compiled and/or interpreted programming language.

The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus and constituents included therein, for example, a processor, an encoder and a decoder, may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Additionally, this application or its claims may refer to "determining" various pieces of information. Determining the information may include one or more of, for example, estimating the information, calculating the information, predicting the information, or retrieving the information from memory.

Further, this application or its claims may refer to "accessing" various pieces of information. Accessing the information may include one or more of, for example, receiving the information, retrieving the information (for example, from memory), storing the information, processing the information, transmitting the information, moving the information, copying the information, erasing the information, calculating the information, determining the information, predicting the information, or estimating the information.

Additionally, this application or its claims may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

According to different embodiments, the parameterized transfer function is signaled in the picture encoded or decoded according to the invention, or in a stream including the picture. In some embodiments, an information representative of the parameterize transfer function is signaled in the picture or in the stream including the picture. This information is used by a decoding method or decoder to identify the parameterized transfer function that is applied according to the invention. In one embodiment, this information includes an identifier that is known on encoding and decoding side. According to other embodiments, this information includes parameters used as a basis for parameterized transfer functions. According to a variant of the invention, this information comprises an indicator of the parameters in the picture or in a bit-stream including the picture, based on a set of defined values. According to a variant of the invention, this information comprises an indication based on whether the parameters are signaled explicitly or whether the parameters are signaled implicitly based on a set of defined values. According to different variants of the invention, this information is included in at least one syntax element included in at least one of a Picture Parameter Set (PPS), a Sequence Parameter Set (SPS), a Supplemental Enhancement Information (SEI) message, a Video Usability Information (VUI), Consumer Electronics Association (CEA) message, and a header.

According to different embodiments of the invention, encoding the resulting V(L) includes compressing V(L) with a picture or video encoder, using for example JPEG, AVC or HEVC compression standards. The decoding includes corresponding reverse compression to the received picture before applying a parameterized transfer function

According to different embodiments of the invention, encoding the resulting V(L) includes digitizing or quantizing the resulting V(L). The decoding includes corresponding reverse compression to the received picture before applying a parameterized transfer function.

The invention also concerns apparatus for encoding and for decoding adapted to perform respectively the above methods of encoding and decoding.

**Claims**

1. A method for encoding a picture, the method comprising:

   receiving a picture;
   applying a parameterized transfer function to a luminance (L) signal of the picture to determine a resulting V(L) transformed signal;
   encoding the resulting V(L);
   wherein the parameterized transfer function is adjusted based on a plurality of parameters to model one of a plurality of transfer functions.

2. The method of claim 1, further comprising signaling an information representative of the parameterized transfer function.

3. The method of claim 1 or 2, further comprising encoding the parameters and signaling the encoded parameters in a bit-stream.

4. The method of any of claims 1 to 3, further comprising signaling an indicator of the parameters in a bit-stream based on a set of defined values.

5. The method of any of claims 2 to 4, further comprising signaling an indication based on whether the parameters are signaled explicitly or whether the parameters are signaled implicitly based on a set of defined values.

6. The method of any of claims 1 to 5, wherein the signaling is performed using at least one syntax element included in at least one of a Picture Parameter Set (PPS), a Sequence Parameter Set (SPS), a Supplemental Enhancement Information (SEI) message, a Video Usability Information (VUI), Consumer Electronics Association (CEA) message, and a header.

7. The method of any of claims 1 to 6, wherein the luminance is at least one selected from a group of: RGB, Y, a linear combination of linear RGB, a luma that is a linear combination of non-linear RGB, and non-linear luminance.

8. The method of any of claims 1 to 7, wherein the luminance is at least one of a relative luminance and an absolute luminance.

9. The method of any of claims 1 to 8, wherein the parameterized transfer function is determined based on a functional model represented with function:

$$V(L) = \frac{sL^n + c}{L^n + st} + m$$

where s, t, c, n, and m are the parameters and L is a luminance value of the picture.

10. The method of any of claim 1 to 8, wherein the parameterized transfer function is determined based on a functional model represented with function:

$$V(L) = \frac{sL^n + c}{L^n + st}$$

where s, t, c, and n are the parameters and L is a luminance value of the picture.

11. The method of any of claims 1 to 8, wherein the parameterized transfer function is determined based on a functional model represented with function:

$$V(L) = \frac{sL + c}{L + st} + m$$

where s, t, c and m are the parameters and L is a luminance value of the picture.

12. The method of any of claims 1 to 11, wherein encoding the resulting V(L) includes compressing V(L) with a picture or video encoder.

13. The method of any of claims 1 to 12, wherein encoding the resulting V(L) includes digitizing or quantizing the resulting V(L).

14. The method of any of claims 1 to 13, wherein the parameters are determined based on at least one selected from a group of: a plurality of parameters received from a source, locally stored parameters, a set of defined parameters chosen from among a plurality of sets of defined parameters.

**15.** A method for decoding a digital picture, the method comprising:

receiving the digital picture;
applying a parameterized transfer function to the digital picture to determine a luminance (L) signal of the digital picture, the parameterized transfer function being based on a plurality of parameters;
wherein the parameterized transfer function is adjusted based on a plurality of parameters to model one of a plurality of transfer functions.

**16.** The method of claim 15, wherein the parameterized transfer function is determined based on a functional model represented with function:

$$L(V) = \left( \frac{c - (V - m)st}{V - m - s} \right)^{1/n}$$

where s, t, c, n, and m are the parameters and V is a codeword.

**17.** The method of any of claim 15, wherein the parameterized transfer function is determined based on a functional model represented with function:

$$L(V) = \left( \frac{c - (V-m)st}{\min(V-m-s,M)} \right)^{1/n}$$

where s, t, c, n, and m are the parameters, where M is a constant function and V is a codeword.

**18.** The method of claim 15, wherein the parameterized transfer function is determined based on a functional model represented with function:

$$L(V) = \left( \frac{c - (V)st}{V - s} \right)^{1/n}$$

where s, t, c, and n are the parameters and V is a codeword.

**19.** The method of claim 15, wherein the parameterized transfer function is determined based on a functional model represented with function:

$$L(V) = \left( \frac{c - Vst}{\min(V-s,M)} \right)^{1/n}$$

where s, t, c, and n are the parameters, where M is a constant function and V is a codeword representative of the digital picture.

**20.** The method of claims 1 or 15 or the apparatus of claim 14, wherein the parameters are generated by optimizing a parameterized transfer function with an identified transfer function to be modeled.

100

Receive Picture
101

Apply OETF to Picture to
Determine V(L)
102

Encode V(L)
103

Output Bit-stream
104

Figure 1

```
                          ┌─────────────────────────────────┐
                          │    Receive parameters for        │
                          │  adaptive OETF curve selection    │
                          │            201                    │
                          └─────────────────────────────────┘
                                        │
         ┌──────────────────┐           ▼
         │  Receive Picture  │  ┌─────────────────────────────────┐
         │       203         │  │    Model an OETF Curve           │
         └──────────────────┘  │  based on received parameters     │
  200 ─→                       │            202                    │
                               └─────────────────────────────────┘
                                        │
              │                         │
              ▼                         ▼
         ┌──────────────────────────────────────┐
         │  Apply OETF to picture to determine V(L) │
         │                 204                      │
         └──────────────────────────────────────┘
                        │
                        ▼                              ┌──────────────────┐
              ┌──────────────────┐                     │ Encode parameters │
              │   Encode V(L)     │                     │        206         │
              │       205         │                     └──────────────────┘
              └──────────────────┘                              │
                        │                                       │
                        ▼                                       │
                ╭─────────────────────╮                         │
                │   Output Bit-stream  │◄────────────────────────┘
                │         207          │
                ╰─────────────────────╯
```

Figure 2

36

300

Receive parameters identifying OETF curve
301

Are the parameters for the
OETF model defined?
302

no

Determine
parameters
305

yes

Identify parameter information
(e.g., indicator) for the OETF model
303

Quantize parameters
306

Encode parameter information
304

Encode parameters
307

Insert into bit-stream
308

Figure 3

400 ⟶

Receive bit-stream
401

Decode bit-stream
402

Apply EOTF1 (or inverse
OETF1) resulting into
linearized picture1
403

Convert picture1 to picture2 and apply OETF2
or (inverse EOTF2) into renderized picture2
404

Output linearized picture 1 or
renderized picture2
405

Figure 4

500

Receive bit-stream
501

Parse and decode bit-stream
502

Determine parameters for
EOTF or inverse OETF
503

Process video signal
504

Apply EOTF or inverse OETF to
video signal
505

Figure 5

600 →

Parameterized OETF
parameters
602

Picture
601

Apply
parameterized
OETF
603

V(L)
604

Optional
Convertor
605

Encoder
606

01110..1

Bit-stream
607

Figure 6

Figure 7

Figure 8

Figure 9

Figure 10A

Figure 10B

OETFs

Figure 10C

Figure 11A

Figure 11B

EOTFs

| s = | 1.3471 | 1347/1000 | 10 |
| t = | 0.55846 | 1117/2000 | 11 |
| c = | 0.03886 | 1943/50000 | 16 |
| m = | -0.045738 | -2287/50000 | 16 |
| n = | 0.61738 | 3087/5000 | 12 |

mean error between curves =1.8014e-05
mean error in rationals =3.7099e-09
gcd(s,t,c,m,n) =1/50000
$\log_2$ denom =16 (value =65536)

TCH - match to BBC EOTF
BBC EOTF

Luminance

Normalised Codewords

Figure 11C

OETFs

Figure 12A

Figure 12B

Figure 12C

Figure 13A

Figure 13B

Figure 13C

Europäisches
Patentamt

European
Patent Office

Office européen
des brevets

# EUROPEAN SEARCH REPORT

Application Number

EP 15 30 5092

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/007505 A1 (KONINKL PHILIPS NV [NL]) 22 January 2015 (2015-01-22)<br>* the whole document *<br>----- | 1-20 | INV.<br>H04N19/70<br>H04N19/85<br>H04N19/98 |
| X | RAFAL MANTIUK ET AL: "Modeling a Generic Tone-mapping Operator",<br>COMPUTER GRAPHICS FORUM,<br>vol. 27, no. 2, 1 April 2008 (2008-04-01),<br>pages 699-708, XP055091500,<br>ISSN: 0167-7055, DOI:<br>10.1111/j.1467-8659.2008.01168.x<br>* abstract *<br>* sections 1 and 3-5 *<br>----- | 1-20 | |
| A | SEGALL A ET AL: "Tone mapping SEI message",<br>19. JVT MEETING; 31-03-2006 - 07-04-2006;<br>GENEVA, CH; (JOINT VIDEOTEAM OF ISO/IEC JTC1/SC29/WG11 AND ITU-T SG.16 ),<br>no. JVT-S087, 1 April 2006 (2006-04-01),<br>XP030006466,<br>ISSN: 0000-0409<br>* the whole document *<br>----- | 1-20 | TECHNICAL FIELDS SEARCHED (IPC)<br><br>H04N<br>G09G |
| A | HATTORI S ET AL: "HLS: SEI message for Knee Function Information",<br>16. JCT-VC MEETING; 9-1-2014 - 17-1-2014;<br>SAN JOSE; (JOINT COLLABORATIVE TEAM ON VIDEO CODING OF ISO/IEC JTC1/SC29/WG11 AND ITU-T SG.16 ); URL:<br>HTTP://WFTP3.ITU.INT/AV-ARCH/JCTVC-SITE/,<br>no. JCTVC-P0050,<br>31 December 2013 (2013-12-31),<br>XP030115513,<br>* the whole document *<br>* sections 1 and 3-6 *<br>----- | 1-20 | |

-/--

The present search report has been drawn up for all claims

| Place of search | Date of completion of the search | Examiner |
|---|---|---|
| The Hague | 3 July 2015 | André, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 15 30 5092

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FOGG (HARMONIC) C ET AL: "Indication of SMPTE 2084, 2085 and carriage of 2086 metadata in HEVC", 16. JCT-VC MEETING; 9-1-2014 - 17-1-2014; SAN JOSE; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, no. JCTVC-P0084-v2, 14 January 2014 (2014-01-14), XP030115562, * the whole document * | 1-20 | |
| A | FLYNN D ET AL: "HEVC Range Extensions Draft 5", 15. JCT-VC MEETING; 23-10-2013 - 1-11-2013; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, no. JCTVC-O1005, 19 November 2013 (2013-11-19), XP030115459, * pages 308-315 * | 1-20 | |

TECHNICAL FIELDS
SEARCHED      (IPC)

The present search report has been drawn up for all claims

| Place of search | Date of completion of the search | Examiner |
|---|---|---|
| The Hague | 3 July 2015 | André, Thomas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.........................................................................

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 15 30 5092

This annex lists the patent family members relating to the patent documents cited in the above-mentioned European search report.
The members are as contained in the European Patent Office EDP file on
The European Patent Office is in no way liable for these particulars which are merely given for the purpose of information.

03-07-2015

| Patent document cited in search report | Publication date | Patent family member(s) | Publication date |
|---|---|---|---|
| WO 2015007505 A1 | 22-01-2015 | NONE | |

EPO FORM P0459

## REFERENCES CITED IN THE DESCRIPTION

**Patent documents cited in the description**

- US 20140363093 A

**Non-patent literature cited in the description**

- *ITU-R SG6/W6-C group, Working Party 6C (WP 6C) - Programme production and quality assessment, http://www.itu.int/en/ITU-R/study-groups/rsg6/rwp6c/ Pages/default.aspx*
- **BORER, T.** Non-linear Opto-Electrical Transfer Functions for High Dynamic Range Television. *BBC,* 2013
- **SCOTT MILLER, M. N.** Perceptual Signal Coding for More Efficient Usage of Bit Codes. *SMPTE Motion Imaging Journal,* 2013, vol. 122, 52-59
- **BARTEN, P. G.** Contrast Sensitivity of the Human Eye and its Effects on Image Quality. SPIE Optical Engineering Press, 1999, vol. 72
- **VLEUTEN, R. V.** *Philips' High Dynamic Range Proposal. Joint DVB-EBU HDR Workshop,* 2014